# EUROPEAN PATENT SPECIFICATION

(11) **EP 1 980 126 B1**
(45) Date of publication and mention of the grant of the patent: **11.08.2010**
(21) Application number: 06852016.2
(22) Date of filing: 20.12.2006
(51) Int. Cl.: H04W 72/12

(54) **Methods and apparatus related to selecting a reporting alternative in a request report**
Verfahren und vorrichtungen in Bezug auf die Auswahl einer Meldealternative in einer Anforderungsmeldung
Procédés et dispositif liés à la sélection d'un type de production de rapport dans un rapport de demande

(30) Priority: 22.12.2005 US 752973 P; 17.01.2006 US 333792; 13.12.2006 US 610060
(43) Date of publication of application: 15.10.2008
(73) Proprietor: Qualcomm Incorporated, San Diego, CA 92121-1714 (US)
(72) Inventor: DAS, Arnab c/o QUALCOMM INCORPORATED, San Diego, California 92121-1714 (US); PARK, Vincent, Budd Lake, NJ 07828 (US); HUSSAIN, Yunus, Bridgewater, NJ 08807 (US); CELEBI, Samel, Basking Ridge, NJ 07920 (US)
(74) Representative: Gates, Marie Christina Esther
(86) International application number: PCT/US2006/048652
(87) International publication number: WO 2008/100242

(56) References cited:
- EP-A- 1 511 245
- WO-A-2004/084503

## Description

### FIELD OF THE INVENTION

The present invention relates to wireless communications methods and apparatus and, more pai-ticularly, to methods and apparatus related to selecting a reporting alternative, for example, a reporting alternative for an uplink traffic request report.

### BACKGROUND

In multiple access wireless communications systems, multiple wireless terminals are typically in competition for limited air link resources. A wireless terminal, operating in a state supporting uplink traffic signaling, typically needs to communicate control information to a base station attachment point. The information may be communicated in the form of one or more control information reports which allow the base station attachment point to characterize the wireless terminal and allocate resources such as uplink transmission resources.

A wireless terminal may support uplink traffic corresponding to a plurality of different types of applications. At different times the wireless terminal may have different traffic channel reporting needs. Accordingly, there is a need for methods and apparatus which would allow for a variety of reporting alternatives. For example, in systems which used a fixed bit size request report format, it would be beneficial if reporting alternatives corresponding to different groupings of traffic could be supported without changing the number of bits used for a report. In addition, assuming methods and apparatus for supporting reporting alternatives were developed, it would also be beneficial if methods and/or apparatus which could be used to select between available reporting alternatives could also be developed and/or supported. Improvements in reporting, and/or selection between reporting alternatives, if available, could facilitate efficient air link resource allocation and/or help to satisfy a wireless terminal's changing traffic needs and/or quality of service requirements.

[0003a] International Patent Application Publication No. WO2004/0845 relates to communicating in a reverse wireless link information relating to buffer status and data rate of a mobile station. European Patent Application Publication No. 1 511 245 relates to scheduling packet transmission in a mobile telecommunication system.

### SUMMARY

[0003b] The present invention relates to a wireless terminal for use in a wireless communications system and a method of operating such a wireless terminal as defined in the appended claims.

Various embodiments are directed to methods and apparatus for supporting a plurality of reporting alternatives, e.g., for a fixed size report. Some features are related to selecting a reporting alternative for a control information request report, e.g., an uplink traffic report which provides information on the amount of data waiting at a communications device to be transmitted. In some embodiments priority levels used in the selecting are predetermined. In some embodiments, priority levels used in the selecting are determined dynamically. Such a report may be viewed and/or interpreted as a request for uplink transmission resources and is therefore sometimes referred to as an uplink request report.

The invention is defined in the independent claims. Particular embodiments are set out in the dependent claims.

### BRIEF DESCRIPTION OF THE FIGURES

Figure 1 is drawing of an exemplary wireless communications system implemented in accordance with various embodiments.

Figure 2 is a drawing of an exemplary wireless terminal, e.g., mobile node, in accordance with various embodiments.

Figure 3 is a drawing of an exemplary base station in accordance with various embodiments.

Figure 4 is a drawing of an exemplary wireless Terminal, e.g., mobile node, in accordance with various embodiments.

Figure 5 is a drawing of an exemplary base station in accordance with various embodiments.

Figure 6 is a drawing of a flowchart of an exemplary method of operating a wireless terminal in a wireless communications system to communicate transmission backlog information.

Figure 7 is a flowchart of an exemplary method of operating a wireless terminal in a wireless communications system.

Figure 8 is a drawing of exemplary uplink dedicated control channel (DCCH) segments in an exemplary uplink timing and frequency structure in an exemplary orthogonal frequency division multiplexing (OFDM) multiple access wireless communications system.

Figure 9 includes a table of a set of exemplary Dedicated Control Channel Reports (DCRs) used in an exemplary DCCH reporting structure.

Figure 10 is a drawing illustrating an exemplary dedicated control channel reporting format including the dedicated control channel reports of Figure 9.

Figure 11 is a drawing including a table describing an exemplary format of exemplary 4 bit uplink traffic request report (ULRQST4) and a column describing reporting alternatives.

Figure 12 is a drawing describing three exemplary request groups in an exemplary wireless terminal.

Figure 13 is a drawing illustrating an example of a method of an exemplary wireless terminal using the exemplary 4 bit uplink request report format of Figure 11 and including the request groups of Figure 12.

Figure 14 is a drawing illustrating another example of a method of an exemplary wireless terminal, using the exemplary 4 bit uplink request report format of Figure 11 and including the request groups of Figure 12.

Figure 15 is a drawing including a table describing an exemplary format of exemplary 4 bit uplink traffic request report (ULRQST4) and a column describing reporting alternatives.

Figure 16 is a drawing describing two exemplary request groups in an exemplary wireless terminal.

Figure 17 is a drawing illustrating an example of a method of an exemplary wireless terminal using the exemplary 4 bit uplink request report format of Figure 15 and including the request groups of Figure 16.

Figure 18 is a drawing illustrating another example of a method of an exemplary wireless terminal using the exemplary 4 bit uplink request report format of Figure 15 and including the request groups of Figure 16.

Figure 19 is a drawing including a table describing an exemplary format of exemplary 4 bit uplink traffic request report (ULRQST4) and a column describing reporting alternatives.

Figure 20 is a drawing describing three exemplary request groups in an exemplary wireless terminal.

Figure 21 is a drawing illustrating an example of a method of an exemplary wireless terminal using the exemplary 4 bit uplink request report format of Figure 19 and including the request groups of Figure 20.

Figure 22 is a drawing illustrating another example of a method of an exemplary wireless terminal using the exemplary 4 bit uplink request report format of Figure 19 and including the request groups of Figure 20.

### DETAILED DESCRIPTION

Not all of the embodiments described hereinafter are embodiments in the sense of the appended claim.

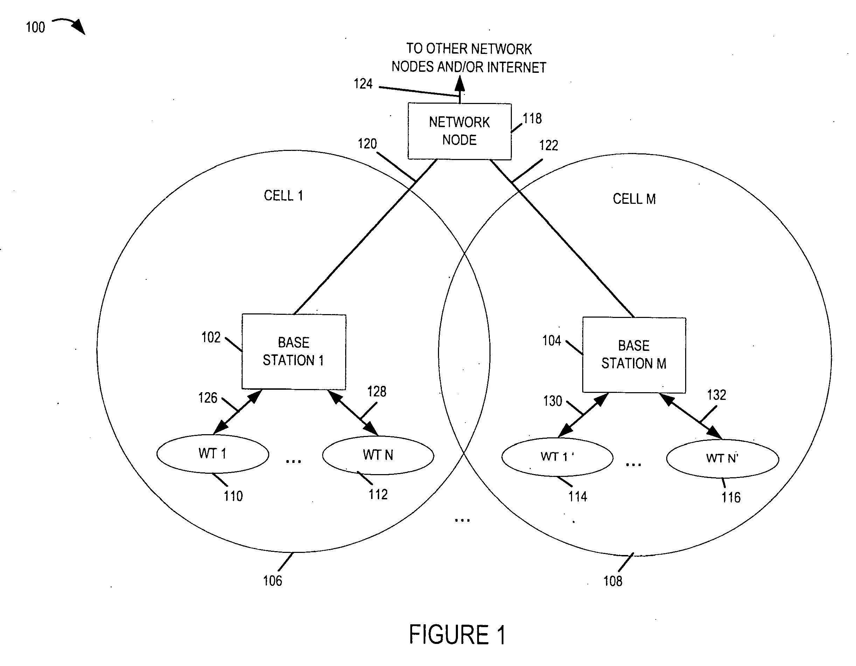

Figure 1 is drawing of an exemplary wireless communications system 100 implemented in accordance with various embodiments. Exemplary wireless communications system 100 is, e.g., an orthogonal frequency division multiple (OFDM) multiple access wireless communications system using a dedicated control channel uplink reporting structure including at least some fixed size multi-bit request reports. The fixed bit size request reports can be used to report transmission backlog information, e.g., the number of frames of information waiting to be transmitted with regard to a queue or set of queues. A backlog report may provide information on one or more request groups where different request groups correspond to different queues or sets of queues which can be used to store information to be transmitted

Exemplary wireless communications system 100 includes a plurality of base stations (base station 1 102, ..., base station M 104). Each base station (102, 104) has a corresponding wireless coverage area (cell 1 106, cell M 108), respectively. System 100 also includes network node 118 which is coupled to base stations (102, 104) via network links (120, 122), respectively. Network node 118 is also coupled to other network nodes and/or the Internet via link 124. Network links (120, 122, 124) are, e.g., fiber optic links. System 100 may also include cells with multiple sectors and/or cells using multiple carriers.

System 100 also includes a plurality of wireless terminals. At least some of the wireless terminals are mobile nodes which may move throughout the communication system. In Figure 1, wireless terminals (WT 1 110, WT N 112) are located in cell 1 106 and coupled to base station 1 102 via wireless links (126, 128), respectively. In Figure 1, wireless terminals (WT 1' 114, WT N' 116) are located in cell M 108 and coupled to base station M 104 via wireless links (130, 132), respectively. In accordance with various embodiments, at least some of the wireless terminals use a request report format, e.g., for a fixed bit size uplink traffic channel request report, allowing the wireless terminal to select, for a request report to be transmitted, between reporting alternatives, said reporting alternatives corresponding to at least two different request groups. For example, an exemplary 4 bit uplink traffic channel request report formal may include 16 distinct bit patterns, and a first subset of the 16 bit mapping patterns may be associated with mapping request group 1 frame count backlog information, while a second subset of the 16 bit mapping patterns may be associated with mapping request group 2 and request group 3 frame count backlog information jointly coded, said first and second subsets being non-overlapping. Continuing with the example, assuming the wireless terminal has non-zero backlog counts in both (i) request group 1 and (ii) at least one of request 2 and request group 3, the wireless terminal selects an alternative to report, e.g., as a function of priority information and/or transmission deadline information.

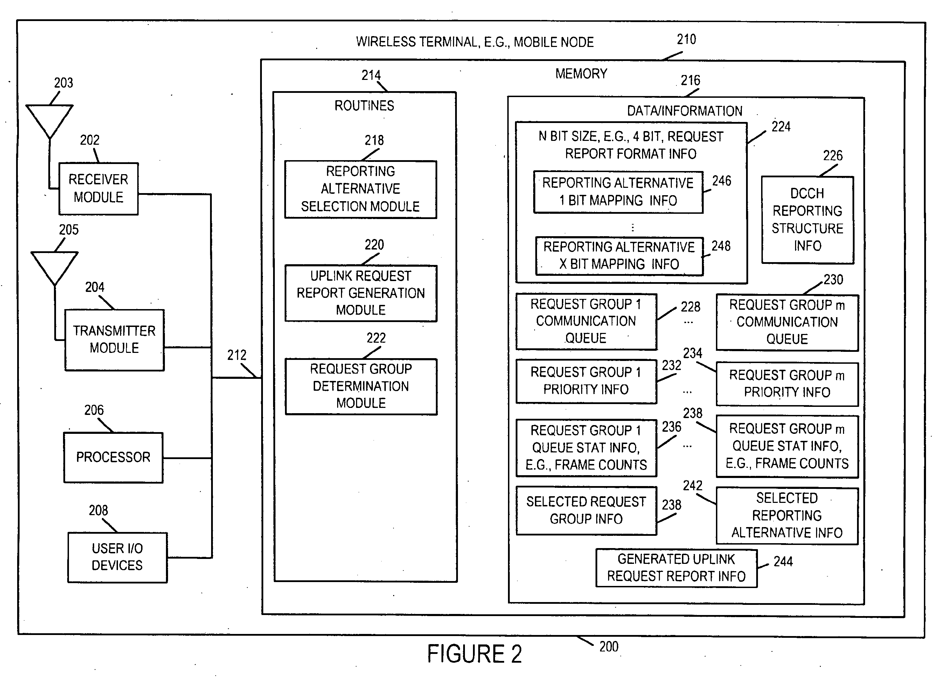

Figure 2 is a drawing of an exemplary wireless terminal 200, e.g., mobile node, in accordance with various embodiments. Exemplary wireless terminal 200 communicates transmission backlog information to a base station, e.g., transmission backlog information for uplink traffic that the wireless terminal intends to transmit corresponding to different request groups. Exemplary wireless terminal 200 includes a receiver module 202, a transmitter module 204, a processor 206, user I/O devices 208, and a memory 210 coupled together via a bus 212 over which the various elements interchange data and information. Memory 210 includes routines 214 and data/information 216. The processor 206, e.g., a CPU, executes the routines 214 and uses the data/information 216 in memory 210 to control the operation of the wireless terminal 200 and implement methods.

Receiver module 202, e.g., an OFDM receiver, is coupled to receive antenna 203 via which the wireless terminal 200 receives downlink signals from base stations. Transmitter module 204, e.g., an OFDM transmitter, is coupled to transmit antenna 205, via which the wireless terminal transmits uplink signals to base stations. The uplink signals include dedicated control channel segment signals. At least some of the dedicated control channel segment signals convey uplink traffic channel request reports, e.g., a 4 bit uplink traffic channel request report. Transmitter module 204 transmits generated uplink request reports to thereby communicate transmission backlog information. In some embodiments, the same antenna is used for receiver and transmitter.

User I/O device 208, e.g., keyboard, keypad, camera, microphone, switches, display, speaker, etc., allow a user of wireless terminal 200 to input data/information, to obtain output data/information, and to control at least some functions of the wireless terminal. For example, via I/O device interface 208, a user may initiate or terminate a communication session and/or an application.

Routines 214 include a reporting alternative selection module 218, an uplink request report generation module 220, and a request group determination module 222. The reporting alternative selection module 218 selects one of a plurality of reporting alternatives, at least some of said reporting alternatives corresponding to different request groups, said different reporting alternatives being part of a report format for an n-bit size uplink request report, said report format defining a plurality of n-bit mappings where n is a positive integer. Uplink request report generation module 220 generates an uplink request report, said generating including mapping backlog information in accordance with the selected reporting alternative to obtain an n-bit information bit pattern to be included in a generated uplink request report. In some embodiments, the generated uplink request report is a multi-bit uplink request report in a dedicated control channel reporting structure.

Request group determination module 222 determines a selected request group, said selected request group having the highest priority level among the request groups that have non-zero backlog and can be reported by the uplink request report. The selection of the request group determination module 222 is used by reporting alternative selection module 218 as an input. In some embodiments, selecting one of the reporting alternatives selects a reporting alternative that conveys backlog information corresponding to the selected request group. In some such embodiments, the selected reporting alternative report backlog information corresponding to at least two request groups, the information corresponding to the two request groups being jointly coded in the generated report.

Data/information 216 includes an N bit size, e.g., 4 bit, request report format information 224, dedicated control channel reporting structure information 226, a plurality of request group communication queues (request group 1 communication queue 228, ..., request group m communication queue 230), a plurality of corresponding request group priority information (request group 1 priority information 232, ..., request group m priority information 234), a plurality of corresponding request group queue statistics information (request group I queue stats info 236, e.g., frame counts of backlog, ..., request group m queue stats info 238, e.g., frame counts of backlog), selected request group information 238, selected reporting alternative information 242, and generated uplink request report information 244.

N bit size request report format information 224 includes information defining said plurality of different n-bit mappings, said plurality of different n-bit mappings includes 2ⁿ or fewer mappings. For example, in one exemplary embodiment where N = 4, there are 16 different mappings, and a first subset of those mapping is associated with a first reporting alternative, while a second subset of those mappings is associated with a second reporting alternative, said first and second subsets being non-overlapping. N bit size request report format information 224 includes a plurality of reporting alternative bit mapping information sets (reporting alternative 1 bit mapping information 246, ..., reporting alternative X bit mapping information 248).

Dedicated control channel (DCCH) reporting structure information 226 includes information identifying DCCH logical channel tones, DCCH segments, mapping of different types of reports to segments, and associated timing in a recurring reporting structure. The different types of reports in the DCCH reporting structure include a request report type in accordance with the N bit size request report format information 224.

Request groups communication queues (request group 1 communication queue 228, ... request group m communication queue 230) are a plurality of communication queues for storing data to be transmitted, where each request group corresponds to one communication queue. In some embodiments, at least some of the different request groups correspond to a set of communication queues. Request group priority information (request group I priority information 232, ..., request group m priority information 234) are stored request group priority information associated with the different request groups. Selection of a reporting alternative is performed as a function of request group priority information. In various embodiments the request group priorities are predetermined. Request groups queue status information (request group 1 queue status info 236, ..., request group m queue status info 238) includes, e.g., frame counts of backlog, e.g., MAC frame counts of backlog, corresponding to (request group 1 communication queue 228, ..., request group m communication queue 230), respectively. Request group determination module 222, uses the queue stats info (236, ..., 238) in determining a selected request group. For example, if a particular request group has a zero frame count, indicating no backlog of uplink traffic corresponding to the request group, that particular request group is removed from consideration.

Selected request group information 238, an output of module 222 and an input to module 218, is, e.g., an identifier identifying which of the m request groups has been selected by request report determination module 222. Selected reporting alternative information 242, an output of module 218 and an input of module 220, is, e.g., an identifier identifying one of the X reporting alternatives in accordance with request report format information 224. Generated uplink request report information 244 is an output of report generation module 220. For example, if the uplink request report is a four bit uplink request report, the report is one of 16 different bit patterns.

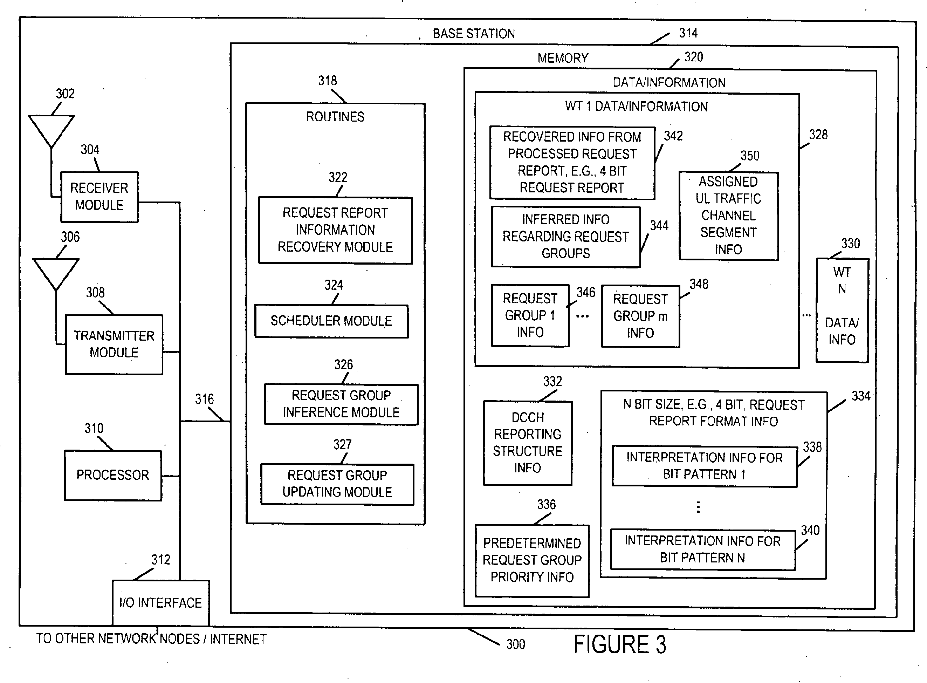

Figure 3 is a drawing of an exemplary base station 300 in accordance with various embodiments. Exemplary base station 300 may be any of the exemplary base stations (BS 1 102, ..., BS M 104) of system 100 of Figure 1. Base station 300 includes a receiver module 304, a transmitter module 308, a processor 310, an I/O interface 312, and a memory 314 coupled together via a bus 316 over which the various elements may interchange data and information. Memory 314 includes routines 318 and data/information 320. The processor 310, e.g., a CPU, executes the routines 318 and uses the data/information in memory 314 to control the operation of the base station and implement methods.

Receiver module 304, e.g., an OFDM receiver, is coupled to receive antenna 302 via which the base station 300 receives uplink signals from wireless terminals, said received uplink signals including dedicated control channel segment signals at least some of the dedicated control channel segment signal conveying traffic channel request reports. Received uplink signals also include traffic channel segment signals. Transmitter module 308, e.g., an OFDM transmitter, is coupled to transmit antenna 306 via which the base station transmits downlink signals to wireless terminals, said downlink signals including assignment signals conveying assignments for uplink traffic channel segments. I/O interface 312 couples the base station to other network node, e.g., other base stations and/or the Internet. Thus I/O interface 312, by coupling the base station 300 to a backhaul network allows a wireless terminal using an attachment point of base station 300 to participate in a communications session with a peer node, e.g., another wireless terminal, using a different base station as its point of network attachment.

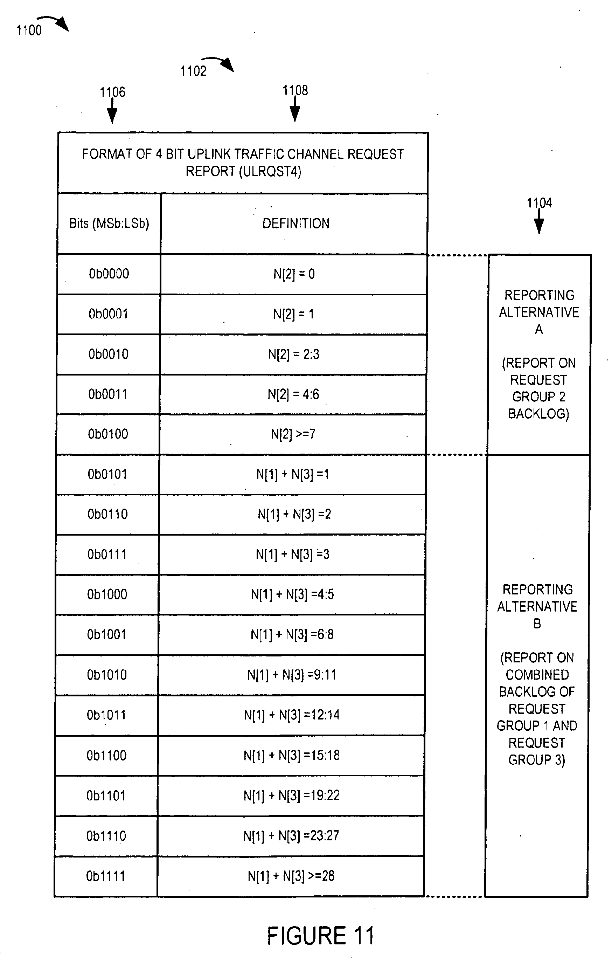

Routines 318 include a request report information recovery module 322, a scheduler module 324, a request group inference module 326 and a request group updating module. Request report information recovery module 322 uses data/information 320 including N bit size request report format information 334 to obtain recovered information from a received request report, e.g., a 4 bit request report for traffic channel resources communicated in an uplink dedicated control channel segment. For example corresponding to WT 1, the recovered information includes recovered information from processed request report 342. The information bits of the request report may be one of a plurality, e.g., 16, of different patterns, and the particular bit pattern is interpreted to mean that one request group or a set of request groups has a certain number of frames in backlog or has a number of frames within a range in its backlog. For example consider an example where the request report format corresponds to that of Figure 11, bit pattern = 0010 may signify that request group 2 has 2 or 3 frames in its backlog waiting to be transmitted.

Scheduler module 324 schedules uplink and downlink traffic channel segments to wireless terminals. For example, scheduler module 324 schedules uplink traffic channel segments in response to received requests communicated in fixed bit size uplink traffic channel request reports, e.g., ULRQST4 reports, from wireless terminals in an On-state of operation using the base station 300 as a current point of network attachment. Assigned uplink traffic channel segment information 350 corresponds to scheduler 324 assignments for WT 1, e.g., information identifying particular indexed uplink traffic channel segments assigned to WT 1.

Request group inference module 326 performs inferences about request groups not directly reported in the received request report. For example, consider that the predetermined request group priority information identifies that request group 2 has a higher predetermined priority than request group 1 or request group 3, and the reporting rules are such that a wireless terminal reports the backlog of the highest priority group with non-zero backlog. If in such a situation, the base station received a report which conveyed information about the combination of request group 1 and request group 3, the base station could infer that request group 2 has a current zero backlog.

Request group updating module 327 uses the recovered information, e.g., info 342, obtained from recovery module 322 and the inferred information, e.g., info 344, obtained from inference module 326 to update the set of request group information corresponding to the wireless terminal, e.g., (request group I information 346, ..., request group m information 348). For example, request group updating module 327 loads new request group frame counts, modifies request frame counts, and/or clears request group counts with regard to one or more of request group information sets, e.g., (request group I information 346, ..., request group m information 348).

Data/information 320 includes a plurality of sets of wireless terminal data/information (WT 1 data/information 328, ..., WT N data/information 330), dedicated control channel reporting structure information 332, N bit size request report format information 334, and predetermined request group priority information 336. WT 1 data/information 328 includes recovered information from processed request report 342, inferred information regarding request groups 344, a plurality of set of request group information (request group 1 information 346, ..., request group m information 348), and assigned uplink traffic channel segment information 350.

N bit size, e.g., 4 bit size, report format information 334 includes interpretation information for a plurality of bit patterns (interpretation information for bit pattern 1 338, ..., interpretation information for bit pattern N 340). For example in one exemplary embodiment, where N = 4 there are 16 distinct bit patterns (0000, 0001, ..., 1111) where each bit pattern has a different interpretation of the information being conveyed in the report.

Predetermined request group priority information 336 includes information associating different uplink traffic request groups with different predetermined priorities. In some embodiments, different wireless terminals have different priorities orderings associated with the request groups being used.

Dedicated control channel (DCCH) reporting structure information 332 includes information identifying DCCH logical channel tones, DCCH segments, mapping of different types of reports to segments, and associated timing in a recurring reporting structure. The different types of reports in the DCCH reporting structure include a request report type in accordance with the N bit size request report format information 334.

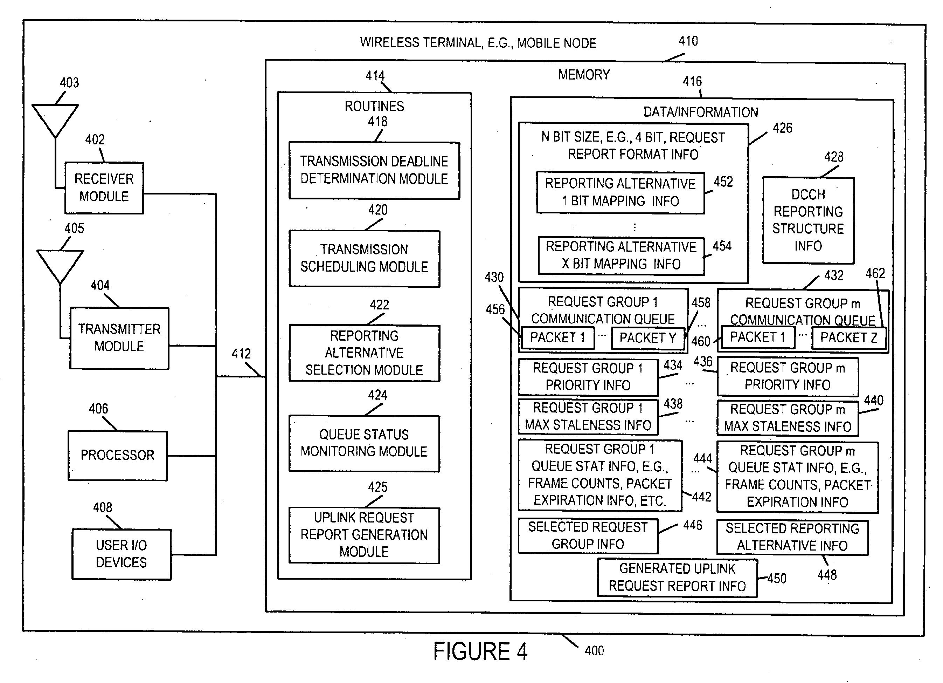

Figure 4 is a drawing of an exemplary wireless terminal 400, e.g., mobile node, in accordance with various embodiments. Exemplary wireless terminal 400 communicates transmission backlog information to a base station, e.g., transmission backlog information for uplink traffic that the wireless terminal intends to transmit corresponding to different request groups. Exemplary wireless terminal 400 includes a receiver module 402, a transmitter module 404, a processor 406, user I/O devices 408, and a memory 410 coupled together via a bus 412 over which the various elements interchange data and information. Memory 410 includes routines 414 and data/information 416. The processor 406, e.g., a CPU, executes the routines 414 and uses the data/information 416 in memory 410 to control the operation of the wireless terminal 400 and implement methods.

Receiver module 402, e.g., an OFDM receiver, is coupled to receive antenna 403 via which the wireless terminal 400 receives downlink signals from base stations. Transmitter module 404, e.g., an OFDM transmitter, is coupled to transmit antenna 405, via which the wireless terminal transmits uplink signals to base stations. The uplink signals include dedicated control channel segment signals. At least some of the dedicated control channel segment signals convey uplink traffic channel request reports, e.g., a 4 bit uplink traffic channel request report. Transmitter module 404 transmits generated uplink request reports to thereby communicate transmission backlog information. For example, the transmitter module 404 transmits an uplink request report including backlog information corresponding to the request group determined to have the highest priority, said transmitted uplink request report being in accordance with the selected reporting format. In some embodiments, the same antenna is used for receiver and transmitter.

User I/O device 408, e.g., keyboard, keypad, camera, microphone, switches, display, speaker, etc., allow a user of wireless terminal 400 to input data/information, to obtain output data/information, and to control at least some functions of the wireless terminal. For example, via I/O device interface 408, a user may initiate or terminate a communications session and/or an application.

Routines 414 include a transmission deadline determination module 418, a transmission scheduling module 420, a reporting alternative selection module 422, a queue status monitoring module 424, and an uplink request report generation module 425. The transmission deadline determination module 418 determines transmission deadline information corresponding to at least some of a plurality of different request queues included queued traffic. Transmission scheduling module 420 dynamically calculates a scheduling priority for each of at least some of a plurality of different request groups for which transmission deadline information was determined. Reporting alternative selection module 422 selects one of a plurality of reporting alternatives, said selected one of the reporting alternative being a reporting alternative corresponding to the request groups determined to have the highest priority. In some embodiments, the reporting alternative selection module 422 selects a reporting alternative which reports backlog information corresponding to the request group having the highest calculated priority, e.g., calculated as a function of determined transmission deadline information. In some embodiments, some of the reporting alternatives may correspond to a request group whose priority is independent of determined transmission deadline information. For example, in some embodiments, one request group may assume the highest priority if it has a non-zero backlog count. Queue status monitoring module 424 determines which of a plurality of different request groups have queued traffic. Uplink request report generation module 425 generates an N bit size uplink request report in accordance with request report format information 426 using the reporting alternative including the selected request group having the determined highest priority and communicating request group backlog information, e.g., frame count information, corresponding to that request group.

Data/information 416 includes an N bit size, e.g., 4 bit, request report formal information 426, dedicated control channel reporting structure information 428, a plurality of request group communication queues (request group 1 communication queue 430, ..., request group m communication queue 432), a plurality of corresponding request group priority information (request group 1 priority information 434, ..., request group m priority information 436), a plurality of request group maximum staleness information (request group 1 max staleness info 438, ..., request group m maximum staleness info 440), a plurality of corresponding request group queue statistics information (request group I queue stats info 442, ..., request group m queue stats info 444; selected request group information 446, selected reporting alternative information 448, and generated uplink request report information 450.

N bit size request report format information 426 includes information defining said plurality of different n-bit mappings, said plurality of different n-bit mappings includes 2" or fewer mappings. For example, in one exemplary embodiment where N = 4, there are 16 different mappings, and a first subset of those mapping is associated with a first reporting alternative, while a second subset of those mappings is associated with a second reporting alternative, said first and second subsets being non-overlapping. N bit size request report format information 452 includes a plurality of reporting alternative bit mapping information sets (reporting alternative 1 bit mapping information 452, ..., reporting alternative X bit mapping information 454).

Dedicated control channel (DCCH) reporting structure information 428 includes information identifying DCCH logical channel tones, DCCH segments, mapping of different types of reports to segments, and associated timing in a recurring reporting structure. The different types of reports in the DCCH reporting structure include a request report type in accordance with the N bit size request report format information 426.

Request groups communication queues (request group 1 communication queue 430, ... request group m communication queue 432) are a plurality of communication queues for storing data to be transmitted, where each request group corresponds to one communication queue. Request group 1 communication queue 430 includes a plurality of packets to be transmitted (packet 1 456, ... packet Y 458). Similarly, request group m communication queue 432 includes a plurality of packets to be transmitted (packet 1 460, ... packet Z 462) In some embodiments, at least some of the different request groups correspond to a set of communication queues. Request group priority information (request group 1 priority information 434, ..., request group m priority information 434) includes stored request group priority information currently associated with the different request groups. At least some of the reporting priorities corresponding to request groups vary over time as a function of determined transmission deadline information. For example, a priority level associated with a particular request group corresponding to time sensitive traffic, e.g., gaming traffic, changes as a function of the remaining time a packet stored in its corresponding queue has until it will be discarded if not transmitted. Selection of a reporting alternative is performed as a function of request group priority information.

Request group maximum staleness information (request group 1 maximum staleness information 438, ..., request group m maximum staleness information 440) includes criteria, e.g., a maximum time limit that a packet deposited in a particular request group queue should be allowed to remain if not transmitted before being dropped. For example, a request group queue corresponding to voice traffic typically has a smaller max time to discard value than a request group corresponding to a gaming application. Request groups queue stats information (request group I queue stats info 442, ..., request group m queue stats info 444) includes, e.g., frame counts of backlog, e.g., MAC frame counts of backlog, and packet expiration information corresponding to (request group 1 communication queue 430, ..., request group m communication queue 432), respectively. Packet expiration information is, in some embodiment, determined by transmission deadline determination module 418

Selected request group information 446, an output of transmission scheduling module 420 and an input to reporting alternative selection module 422, is, e.g., an identifier identifying which of the m request groups has been determined to have the highest priority. Selected reporting alternative information 448, an output of module 422 and an input of uplink request report generation module 425, is, e.g., an identifier identifying one of the X reporting alternatives in accordance with request report format information 426.

Generated uplink request report information 450 is an output of uplink report generation module. For example, if the uplink request report is a four bit uplink request report, the report is one of 16 alternative bit patterns.

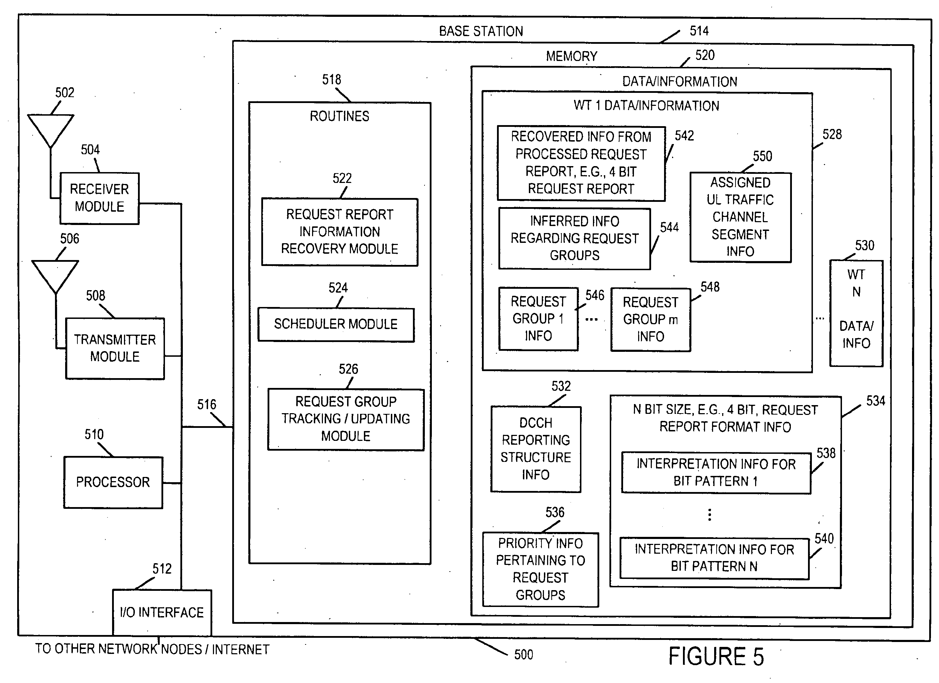

Figure 5 is a drawing of an exemplary base station 500 in accordance with various embodiments. Exemplary base station 500 may be any of the exemplary base stations (BS 1 102, ..., BS M 104) of system 100 of Figure 1. Base station 500 includes a receiver module 504, a transmitter module 508, a processor 10, an I/O interface 512, and a memory 514 coupled together via a bus 516 over which the various elements may interchange data and information. Memory 514 includes routines 518 and data/information 520. The processor 510, e.g., a CPU, executes the routines 518 and uses the data/information 520 in memory 514 to control the operation of the base station 500 and implement methods.

Receiver module 504, e.g., an OFDM receiver, is coupled to receive antenna 502 via which the base station 500 receives uplink signals from wireless terminals, said received uplink signals including dedicated control channel segment signals, at least some of the dedicated control channel segment signals conveying traffic channel request reports. Received uplink signals also include traffic channel segment signals. Transmitter module 508, e.g., an OFDM transmitter, is coupled to transmit antenna 506 via which the base station 500 transmits downlink signals to wireless terminals, said downlink signals including assignment signals conveying assignments for uplink traffic channel segments. I/O interface 512 couples the base station 500 to other network nodes, e.g., other base stations and/or the Internet. Thus I/O interface 512, by coupling the base station 500 to a backhaul network allows a wireless terminal using an attachment point of base station 500 to participate in a communications session with a peer node, e.g., another wireless terminal, using a different base station as its point of network attachment.

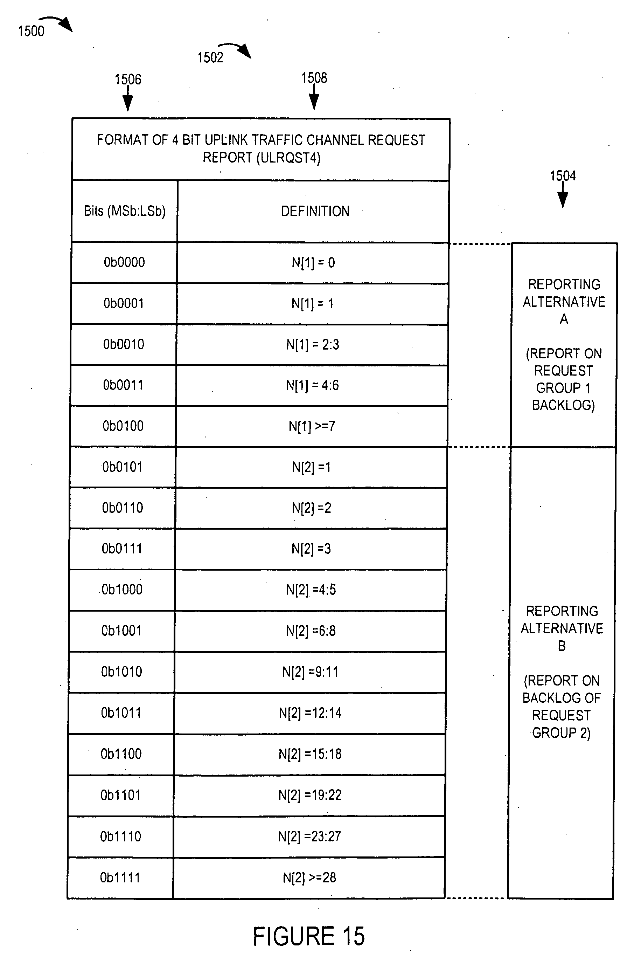

Routines 518 include a request report information recovery module 522, a scheduler module 524, and a request group tracking/updating module 526. Request report information recovery module 522 uses data/information 520 including N bit size request report format information 534 to obtain recovered information from a received request report, e.g., from a 4 bit request report for traffic channel resources communicated in an uplink dedicated control channel segment. For example corresponding to WT 1, the recovered information includes recovered information from processed request report 542. The information bits of the request report may be one of a plurality, e.g., 16, of different patterns, and the particular bit pattern is interpreted to mean that one request group or a set of request groups has a certain number of frames in backlog or has a number of frames within a range in its backlog. For example consider an example where the request report format corresponds to that of Figure 15, bit pattern = 1110 may signify that request group 2 has 23, 24, 25, 26, or 27 frames in its backlog waiting to be transmitted.

Scheduler module 524 schedules uplink and downlink traffic channel segments to wireless terminals. For example, scheduler module 524 schedules uplink traffic channel segments in response to received requests communicated in fixed bit size uplink traffic channel request reports, e.g., ULRQST4 reports, from wireless terminals in an On-state of operation using the base station 500 as a current point of network attachment. Assigned uplink traffic channel segment information 550 corresponds to scheduler 524 assignments for WT 1, e.g., information identifying particular indexed uplink traffic channel segments assigned to WT 1.

Request group tracking/updating module 527 uses the recovered information, e.g., info 542, obtained from recovery module 522 and the inferred information, e.g., info 544, to update the set of request group information corresponding to the wireless terminal, e.g., (request group 1 information 546, ..., request group m information 548). For example, request group tracking/updating module 526 loads new request group frame counts, modifies request frame counts, and/or clears request group counts with regard to one or more of request group information sets, e.g., (request group 1 information 546, ..., request group m information 548).

Data/information 520 includes a plurality of sets of wireless terminal data/information (WT 1 data/information 528, ..., WT N data/information 530), dedicated control channel reporting structure information 532, N bit size request report format information, 534, and priority information pertaining to request groups 536. WT 1 data/information 528 includes recovered information from processed request report 542, inferred information regarding request groups 544, a plurality of set of request group information (request group 1 information 546, ..., request group m information 548), and assigned uplink traffic channel segment information 550.

N bit size, e.g., 4 bit size, report format information 534 includes interpretation information for a plurality of bit patterns (interpretation information for bit pattern 1 538, ..., interpretation information for bit pattern N 540). For example in one exemplary embodiment, where N = 4 there are 16 distinct bit patterns (0000, 0001, ..., 1111) where each bit pattern has a different interpretation of the information being conveyed in the report.

Priority information pertaining to request groups 536 includes information associating at least some of the request groups for at least some of the wireless terminals with variable priorities which are calculated by the wireless terminal as a function of determined transmission deadline information. In some embodiments, at least some of the wireless terminals have request groups with predetermined overriding priority, e.g., one request group may be allocated the highest priority if it has any frames in its backlog; another request group may be allocated the lowest priority. This priority information 536 may be used by the request group tracking/updating module 526. For example, the wireless terminal recognizes that the received request report conveyed queue statistics corresponding to the predetermined overriding priority request group, and the wireless terminal, based on past request information, in some embodiments, extrapolates a request for at least one other request group.

Dedicated control channel (DCCH) reporting structure information 532 includes information identifying DCCH logical channel tones, DCCH segments, mapping of different types of reports to segments, and associated timing in a recurring reporting structure. The different types of reports in the DCCH reporting structure include a request report type in accordance with the N bit size request report format information 534.

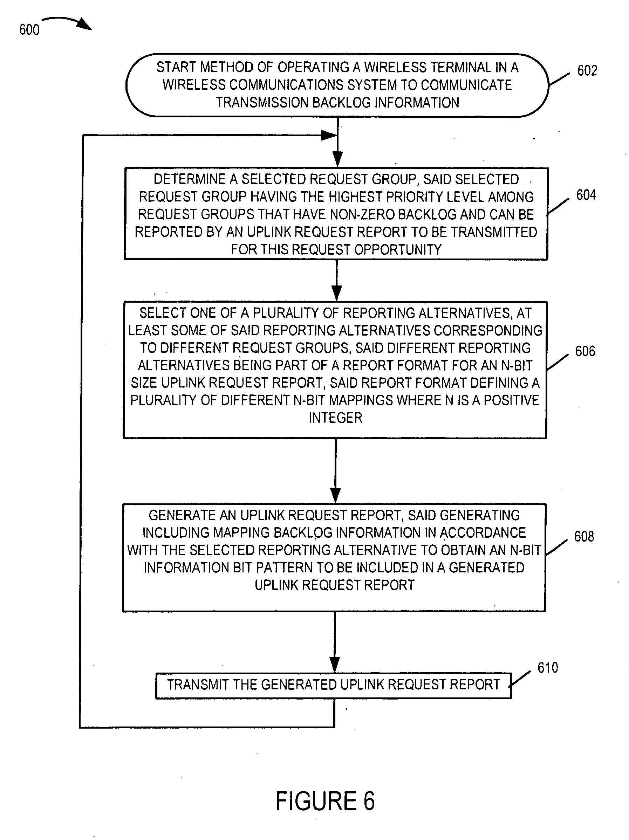

Figure 6 is a drawing of a flowchart 600 of an exemplary method of operating a wireless terminal in a wireless communications system to communicate transmission backlog information. For example, the exemplary wireless communications system is, in some embodiments, an orthogonal frequency division multiplexing (OFDM) multiple access wireless communications system using a dedicated control channel reporting structure and the transmission backlog information is uplink traffic transmission backlog information.

In some embodiments, there are different request groups and each of the different request groups corresponds to one or a set of communication queues which can be used to store data to be transmitted. In various embodiments priorities are associated with the different request groups, e.g., predetermined priorities, and a selection is performed as a function of request group priority.

Operation of the exemplary method starts in step 602, where the wireless terminal is powered on and initialized. Operation proceeds from start step 602 to step 604. In step 604, the wireless terminal determines a selected request group having the highest priority level among request groups that have non-zero backlog and can be reported by an uplink request report to be transmitted for this request opportunity.

Operation proceeds from step 604 to step 606. In step 606, the wireless terminal selects one of a plurality of reporting alternatives , at least some of said reporting alternatives corresponding to different request groups, said different reporting alternatives being part of a report format for an N bit size uplink request report, said report format defining a plurality of different N-bit mappings where N is a positive integer. In some embodiments, the plurality of different N-bit mappings includes 2^{N} or fewer mappings.

In some embodiments, selecting one of the reporting alternatives selects a reporting alternative that conveys backlog information corresponding to the selected request group. In some such embodiments, the selected reporting alternative, for at least some reporting alternatives, reports backlog information corresponding to two request groups being jointly coded in a report.

Operation proceeds from step 606 to step 608. In step 608, the wireless terminal generates an uplink request report, said generating including mapping backlog information in accordance with the selected reporting alternative to obtain an N-bit information bit pattern to be included in a generated uplink request report. For example, the uplink request report is a multi-bit, e.g., 4bit, uplink request report in a dedicated control channel reporting structure. Then, in step 610, the wireless terminal transmits the generated uplink request report.

Operation proceeds from step 610 to step 604, where the wireless terminal determines a selected request group corresponding to another request opportunity.

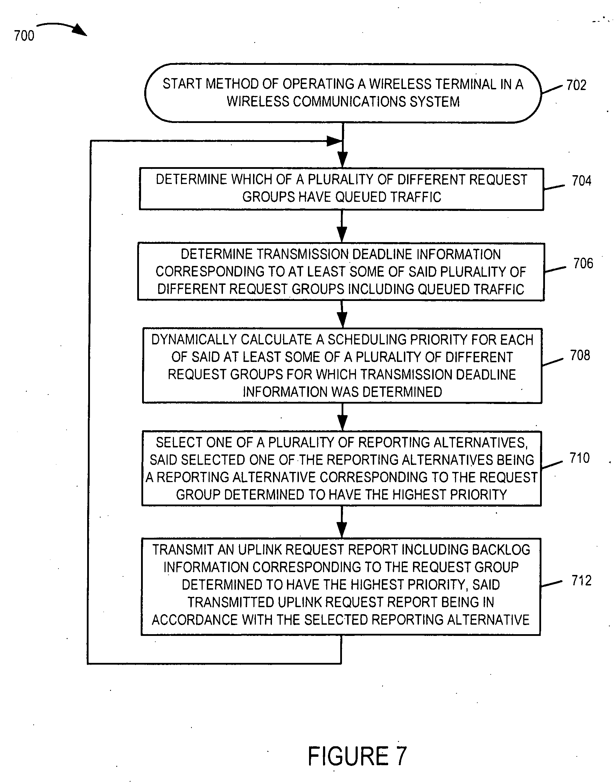

Figure 7 is a drawing of a flowchart 700 of an exemplary method of operating a wireless terminal in a wireless communications system. For example, the exemplary wireless communications system is, in some embodiments, an orthogonal frequency division multiplexing (OFDM) multiple access wireless communications system using a dedicated control channel reporting structure including uplink request reporting opportunities for reporting transmission backlog information of uplink traffic.

Operation starts in step 702, where the wireless terminal is powered on and initialized and proceeds to step 704. In step 704, the wireless terminal determines which of a plurality of different request groups have queued traffic. In various embodiments, each of the different request groups corresponds to one or a set of communication queues which can be used to store data.

Then, in step 706, the wireless terminal determines transmission deadline information corresponding to at least some of said plurality of different request groups including queued traffic.

Operation proceeds from step 706 to step 708. In step 708, the wireless terminal dynamically calculates a scheduling priority for each of said at least some of a plurality of different request groups for which transmission deadline information was determined.

Then, in step 710, the wireless terminal selects one of a plurality of reporting alternatives said selected one of the reporting alternatives corresponding to the request groups determined to have the highest priority. In some embodiments, at least some of said reporting alternatives correspond to different request groups, said different reporting alternatives being part of a report format for an n-bit size uplink request report, said report format defining a plurality of different n-bit mappings where n is a positive integer.

In various embodiments, determining the highest priority includes considering a priority of at least one additional request group in addition to said at least some of a plurality of different request groups. In some such embodiments, said at least one additional request group is determined to have the highest priority provided it has at least some traffic to be transmitted.

In some embodiments, selecting the reporting alternative includes selecting the reporting alternative which reports backlog information corresponding to the request group having the highest calculated priority. In some embodiments, at some times, selecting the request group having the highest calculated priority includes at least some traffic that will be dropped if not allocated traffic channel resources in response to the generated uplink request report.

Operation proceeds from step 710 to step 712. In step 712, the wireless terminal transmits an uplink request report including backlog information corresponding to the request group determined to have the highest priority, said transmitted uplink request report being in accordance with the selected reporting alternative. In some embodiments, the report is a multi-bit uplink request report in a dedicated control channel reporting structure. Operation proceeds from step 712 to step 704, where the wireless terminal determines, for another point in time, which of a plurality of different request groups have queued traffic.

In some embodiments, at least some of the different request groups include a request group associated with voice traffic and a request group associated with another type of time critical traffic, and wherein a packet placed in a request group queue associated with said another type of time critical traffic is allowed to remain for a longer time than a packet placed in a request groups queue associated with voice traffic before being dropped if not transmitted. In some such embodiments, said another type of time critical traffic is gaming traffic.

In various embodiments, the relative priority level ranking between said voice traffic request group and said another type of time critical traffic changes over time, e.g., as a function of determined transmission deadline information. For example, consider that one of the voice request group and said another type of time critical traffic request group includes a packet or group of packets about to expire and be dropped if not allocated resources in an allocation corresponding to the pending request report, while the other one of the voice request group and said another type of time critical traffic request group does not includes a packet about to expire and be dropped if not allocated resources in an allocation corresponding to the pending request report. In such a situation, the higher priority can be assigned to the request group with the packet about to expire.

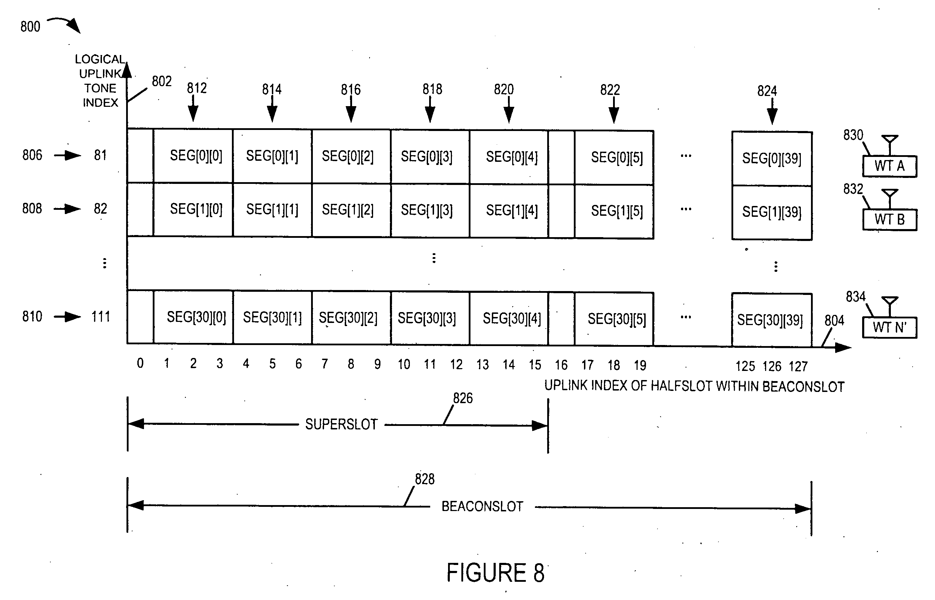

Figure 8 is a drawing 800 of exemplary uplink dedicated control channel (DCCH) segments in an exemplary uplink timing and frequency structure in an exemplary orthogonal frequency division multiplexing (OFDM) multiple access wireless communications system. The uplink dedicated control channel is used to send Dedicated Control Reports (DCR) from wireless terminals to base stations. Vertical axis 802 plots logical uplink tone index while horizontal axis 804 plots the uplink index of the halfslot within a beaconslot. In this example, an uplink tone block includes 113 logical uplink tones indexed (0, ..., 112); there are seven successive OFDM symbol transmission time periods within a halfslot, 2 additional OFDM symbol time periods followed by 16 successive half-slots within a superslot, and 8 successive superslots within a beacon slot. The first 9 OFDM symbol transmission time periods within a superslot are an access interval, and the dedicated control channel does not use the air link resources of the access interval.

The exemplary dedicated control channel is subdivided into 31 logical tones (uplink tone index 81 806, uplink tone index 82 808, ... , uplink tone index 111 810). Each logical uplink tone (81, ..., 111) in the logical uplink frequency structure corresponds to a logical tone indexed with respect to the DCCH channel (0, ..., 30).

For each tone in the dedicated control channel there are 40 segments in the beaconslot corresponding to forty columns (812, 814, 816, 818, 820, 822, ..., 824). The segment structure repeats on a beaconslot basis. For a given tone in the dedicated control channel there are 40 segments corresponding to a beaconslot 828; each of the eight superslots of the beaconslot includes 5 successive segments for the given tone. For example, for first superslot 826 of beaconslot 828, corresponding to tone 0 of the DCCH, there are five indexed segments (segment [0][0], segment [0][1], segment [0][2], segment [0][3], segment [0][4]). Similarly, for first superslot 826 of beaconslot 828, con-esponding to tone 1 of the DCCH, there are five indexed segments (segment [1][0], segment [1][1], segment [1][2], segment [1][3], segment [1][4]). Similarly, for first superslot 826 of beaconslot 828, corresponding to tone 30 of the DCCH, there are five indexed segments (segment [30][0], segment [30][1], segment [30][2], segment [30][3], segment [30][4]).

In this example each segment, e.g., segment [0][0], comprises one tone for 3 successive half-slots, e.g., representing an allocated uplink air link resource of 21 OFDM tone-symbols. In some embodiments, logical uplink tones are hopped to physical tones in accordance with an uplink tone hopping sequence such that the physical tone associated with a logical tone may be different for successive half-slots, but remains constant during a given half-slot.

Each logical tone of the dedicated control channel may be assigned by the base station to a different wireless terminal using the base station as its current point of attachment. For example, logical tone (506, 508, ..., 510) may be currently assigned to (WT A 830, WT B 832, ..., WT N' 834), respectively.

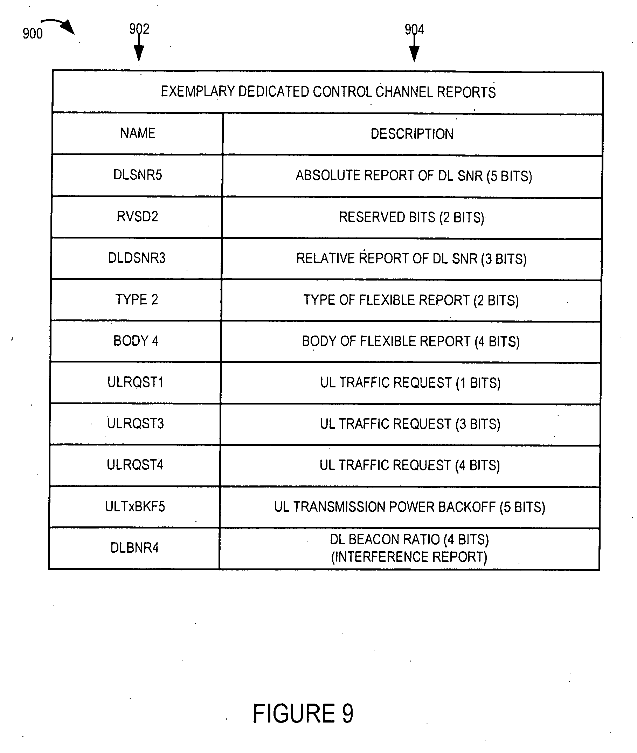

Each uplink DCCH segment is used to transmit a set of Dedicated Control Channel Reports (DCRs). A list of exemplary DCRs is given in table 900 of Figure 9. First column 902 of table 900 describes abbreviated names used for each exemplary report. The name of each report ends with a number which specifies the number of bits of the DCR. Second column 904 of table 900 briefly describes each named report.

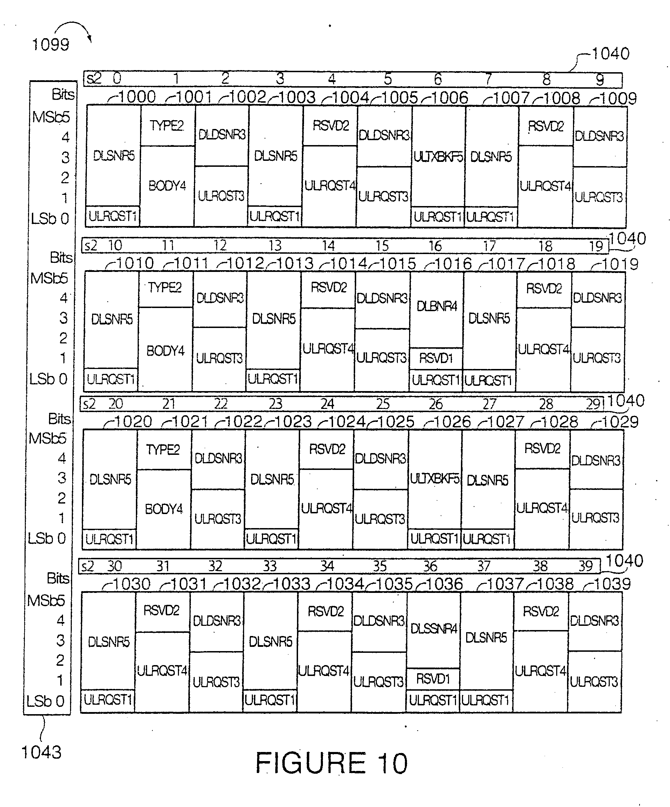

Figure 10 is a drawing 1099 illustrating an exemplary reporting format information in an exemplary beaconslot for a given DCCH tone, e.g., corresponding to a wireless terminal. In Figure 10, each block (1000, 1001, 1002, 1003, 1004, 1005, 1006, 1007, 1008, 1009, 1010, 1011, 1012, 1013, 1014, 1015, 1016, 1017, 1018, 1019, 1020, 1021, 1022, 1023, 1024, 1025, 1026, 1027, 1028, 1029, 1030, 1031. 1032, 1033, 1034, 1035, 1036, 1037, 1038, 1039) represents one segment whose index s2 (0, ..., 39) is shown above the block in rectangular region 1040. Each block, e.g., block 1000 representing segment 0, conveys 6 information bits; each block comprises 6 rows corresponding to the 6 bits in the segment, where the bits are listed from the most significant bit to the least significant bit downwards from the top row to the bottom row as shown in rectangular region 1043.

Figure 11 is a drawing 1100 including a table 1102 describing an exemplary format of exemplary 4 bit uplink traffic request report (ULRQST4) and a column 1104 describing reporting alternatives. Column 1106 of table 1102 lists the 16 possible information bit patterns for the report, and column 1108 lists reported backlog information conveyed corresponding to each of the possible bit patterns. For example, N[2] = 1 indicates that request group 2 has one frame in its backlog to be transmitted; N[1]+N[3] = 12:14 indicates that the combination of request group 1 and request group 3 has a total of 12, 13, or 14 frames in its backlog to be transmitted. Column 1104 indicates that reporting alternative A reports request group 2 backlog information and corresponds to bit patterns (0000, 0001, 0010, 0011, 0100). Column 1104 also indicates that reporting alternative B reports on the combined backlog of request group 1 and request group 3 and corresponds to bit patterns (0101, 0110, 0111, 1000, 1001, 1010, 1011, 1 loo, 1101, 1110, 1111).

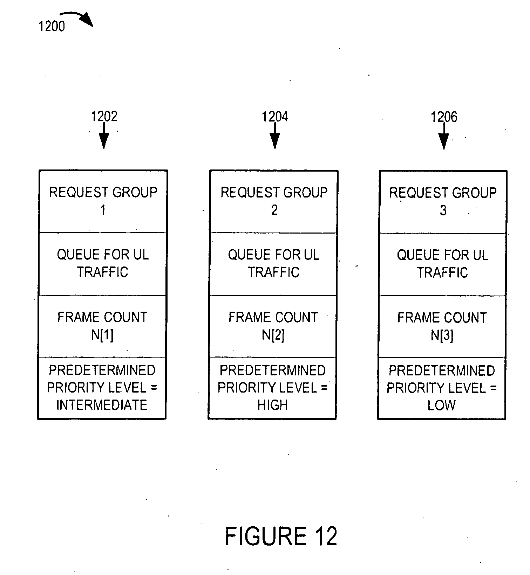

Figure 12 is a drawing 1200 describing three exemplary request groups in an exemplary wireless terminal. Column 1202 describes that request group 1 has a queue for uplink traffic, a frame count N[2], and a predetermined priority level = intermediate. Column 1204 describes that request group 2 has a queue for uplink traffic, a frame count N[2], and a predetermined priority level = high. Column 1206 describes that request group 3 has a queue for uplink traffic, a frame count N[3], and a predetermined priority level = low.

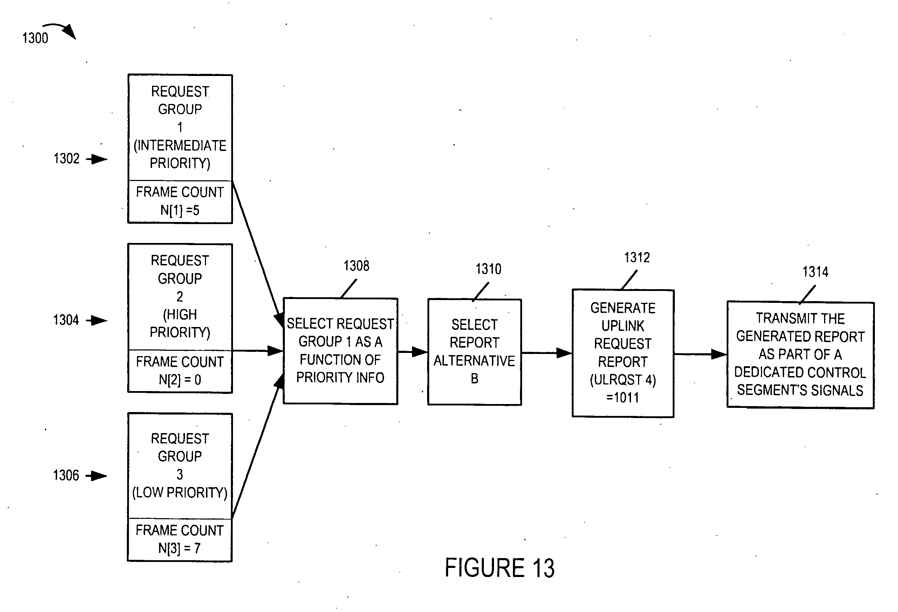

Figure 13 is a drawing 1300 illustrating an example of a method of an exemplary wireless terminal, e.g., wireless terminal 200, using the exemplary 4 bit uplink request report format of table 1100 of Figure 2 and including the request groups of drawing 1200. Block 1302 shows that request group 1 with intermediate priority level has a frame count of 5; block 1304 shows that request group 2 with high priority level has a frame count of 0; block 1306 shows that request group 3 with low priority level has a frame count of 7. Block 1308 indicates that the wireless terminal selects request group 1 as a function of priority, e.g., the wireless terminal selects request group 1 because it is the request group having the highest priority level with a non-zero backlog. Block 1310 shows that the wireless terminal selects report alternative B, as report alternative B reports backlog information on request group 1. Block 1312 indicates that the wireless terminal generates an uplink request report with information bit pattern = 1011; namely, N[1] + N[3] = 12, which is the range 12:14 which maps to bit pattern 1011. Then, block 1314 indicates the wireless terminal transmits the generated uplink request report as part of a dedicated control segment's signals.

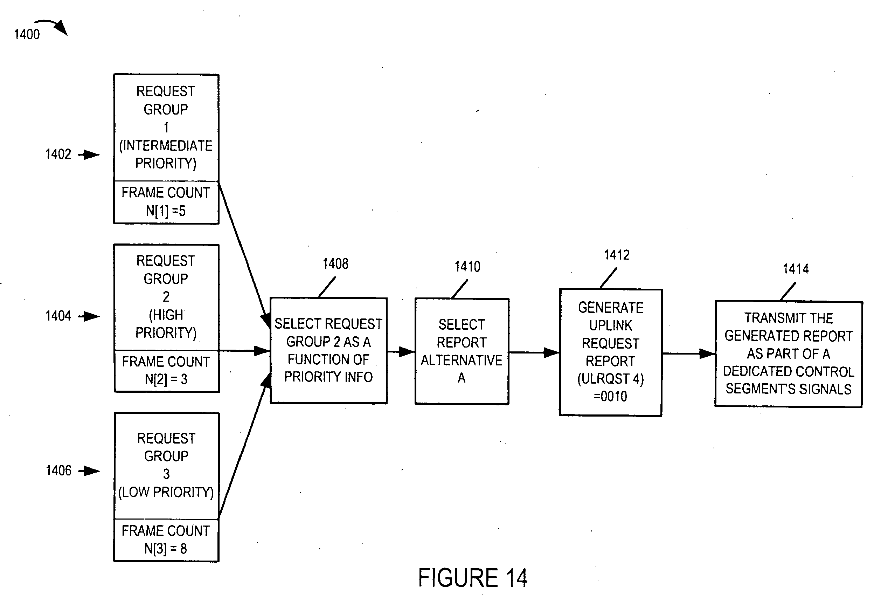

Figure 14 is a drawing 1400 illustrating an example of a method of an exemplary wireless Terminal, e.g., wireless terminal 200, using the exemplary 4 bit uplink request report format of table 1100 of Figure 2 and including the request groups of drawing 1200. Block 1402 shows that request group 1 with intermediate priority level has a frame count of 5; block 1404 shows that request group 2 with high priority level has a frame count of 3; block 1406 shows that request group 3 with low priority level has a frame count of 8. Block 1408 indicates that the wireless terminal selects request group 2 as a function of priority, e.g., the wireless terminal selects request group 2 because it is the request group having the highest priority level with a non-zero backlog. Block 1410 shows that the wireless terminal selects report alternative A, as report alternative A reports backlog information on request group 2. Block 1412 indicates that the wireless terminal generates an uplink request report with information bit pattern = 00 10; namely, N[2] = 3, which is the range 2:3 which maps to bit pattern 0010. Then, block 1414 indicates the wireless terminal transmits the generated uplink request report as part of a dedicated control segment's signals.

Figure 15 is a drawing 1500 including a table 1502 describing an exemplary format of exemplary 4 bit uplink traffic request report (ULRQST4) and a column 1504 describing reporting alternatives. Column 1506 of table 1502 lists the 16 possible information bit patterns for the report, and column 1508 lists reported backlog information conveyed corresponding to each of the possible bit patterns. For example, N[1] = 1 indicates that request group 1 has one frame in its backlog to be transmitted; N[2] = 4:5 indicates that request group 2 has a total of 4 or 5 frames in its backlog to be transmitted. Column 1504 indicates that reporting alternative A reports request group 1 backlog information and corresponds to bit patterns (0000, 0001, 0010, 0011, 0100). Column 1504 also indicates that reporting alternative B reports on request group 2 backlog and corresponds to bit patterns (0101, 0110, 0111, 1000, 1001, 1010, 1011, 1100, 1101, 1110, 1111).

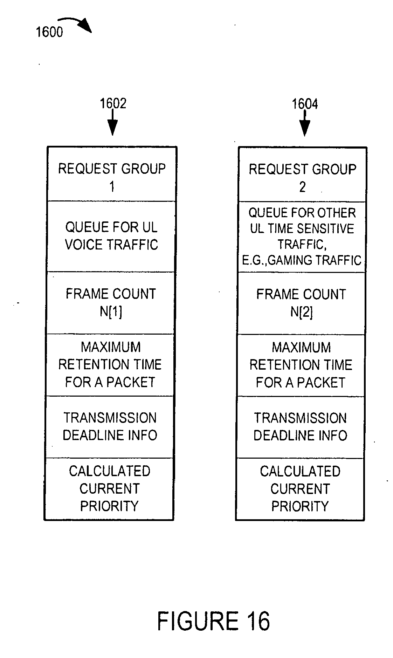

Figure 16 is a drawing 1600 describing two exemplary request groups in an exemplary wireless terminal. Column 1602 describes that request group 1 has a queue for uplink voice traffic, a frame count N[1], a maximum retention time for a packet before discarding, transmission deadline information, and a calculated current priority. Column 1604 describes that request group 2 has a queue for uplink other time sensitive traffic, e.g., gaming traffic, a frame count N[2], a maximum retention time for a packet before discarding, transmission deadline information, and a calculated current priority.

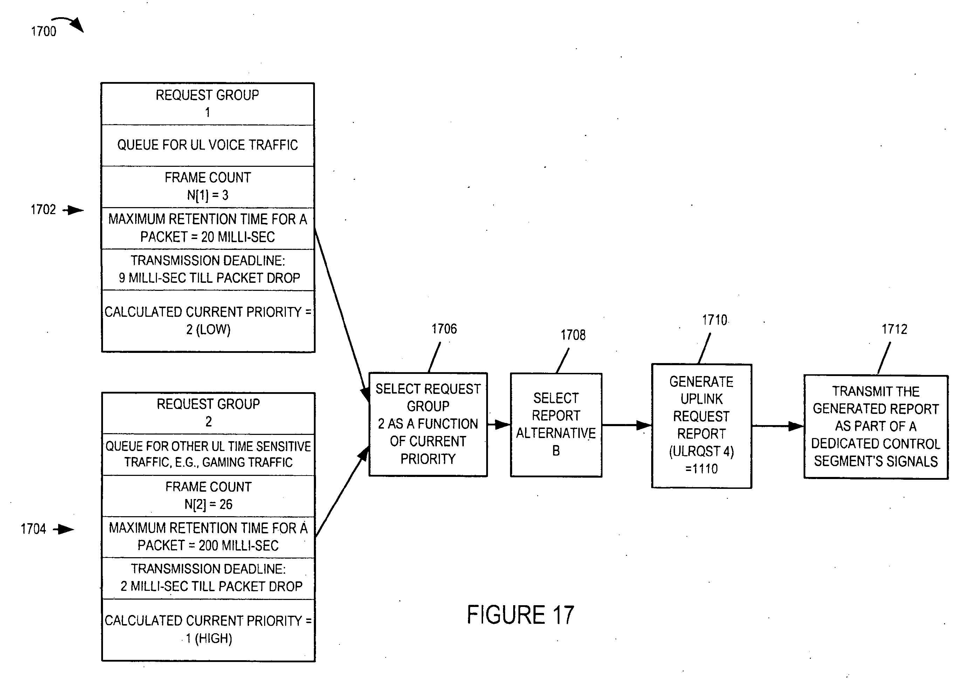

Figure 17 is a drawing 1700 illustrating an example of a method of an exemplary wireless terminal, e.g., wireless terminal 400, using the exemplary 4 bit uplink request report format of table 1500 of Figure 15 and including the request groups of drawing 1600. Block 1702 shows that request group 1, used for voice traffic, has a frame count of 3, a maximum packet retention time of 20 milli-seconds, and a currant transmission deadline of 9 milli-sec before a packet will be dropped if not transmitted; block 1704 shows that request group 2, used for other time sensitive traffic such as gaming traffic, has a frame count of 26, a maximum packet retention time of 200 milli-seconds, and a current transmission deadline of 2 milli-sec before a packet will be dropped if not transmitted. The transmission deadlines have been calculated by the wireless terminal, and the wireless terminal calculates current priority levels as a function of that information. In this example, the wireless terminal has calculated the current priority level = 2 (low priority) for request group 1 as indicated by information 1702 and has calculated the current priority level = 1 (high) for request group 2 as indicated by information 1704, e.g., selecting the request group with the smaller transmission deadline value to have the higher priority. Block 1706 indicates that the wireless terminal selects request group 2 as a function of current priority, e.g., the wireless terminal selects the request group having the highest calculated priority. Block 1708 shows that the wireless terminal selects report alternative B, as report alternative B reports backlog information on request group 2. Block 1710 indicates that the wireless terminal generates an uplink request report with information bit pattern = 1110; namely, N[2] = 26, which is the range 23:27 which maps to bit pattern 1110. Then, block 1712 indicates the wireless terminal transmits the generated uplink request report as part of a dedicated control segment's signals.

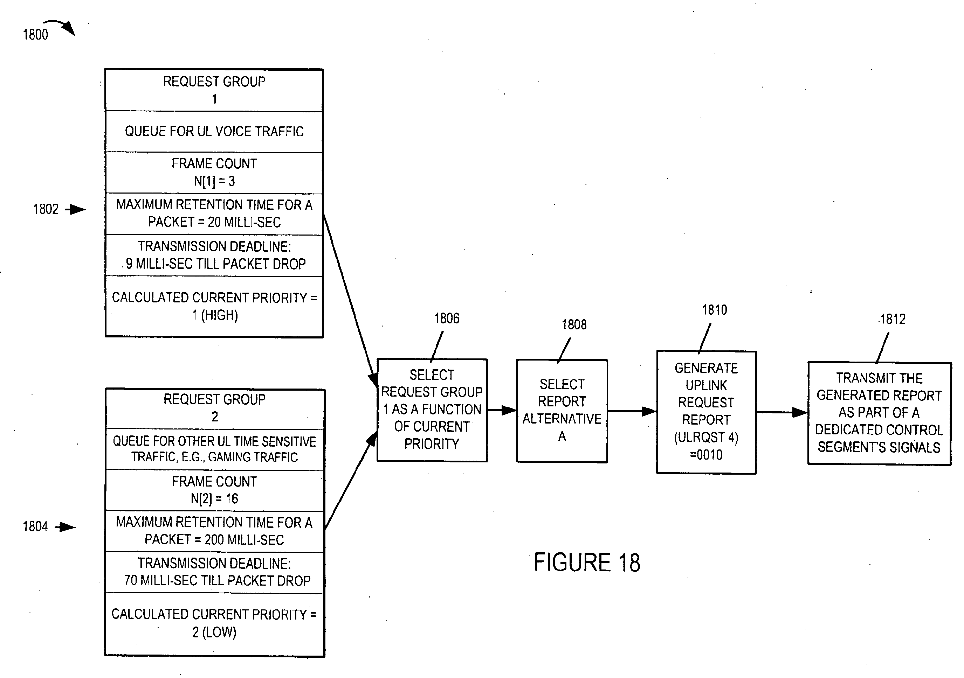

Figure 18 is a drawing 1800 illustrating another example of a method of an exemplary wireless terminal, e.g., wireless terminal 400, using the exemplary 4 bit uplink request report format of table 1500 of Figure 15 and including the request groups of drawing 1600. Block 1802 shows that request group 1, used for voice traffic, has a frame count of 3, a maximum packet retention time of 20 milli-seconds, and a current transmission deadline of 9 milli-sec before a packet will be dropped if not transmitted; block 1804 shows that request group 2, used for other time sensitive traffic such as gaming traffic, has a frame count of 16, a maximum packet retention time of 200 milli-seconds, and a current transmission deadline of 70 milli-sec before a packet will be dropped if not transmitted. The transmission deadlines have been calculated by the wireless terminal, and the wireless terminal calculates current priority levels as a function of that information. In this example, the wireless terminal has calculated the current priority level = 1 (high priority) for request group 1 as indicated by information 1802 and has calculated the current priority level = 2 (low) for request group 2 as indicated by information 1804, e.g., selecting the request group with the smaller transmission deadline value to have the higher priority. Block 1806 indicates that the wireless terminal selects request group I as a function of current priority, e.g., the wireless terminal selects the request group having the highest calculated priority. Block 1808 shows that the wireless terminal selects report alternative A, as report alternative A reports backlog information on request group 1. Block 1810 indicates that the wireless terminal generates an uplink request report with information bit pattern = 0010; namely, N[1] = 3, which is the range 3:3 which maps to bit pattern 0010. Then, block 1812 indicates the wireless terminal transmits the generated uplink request report as part of a dedicated control segment's signals.

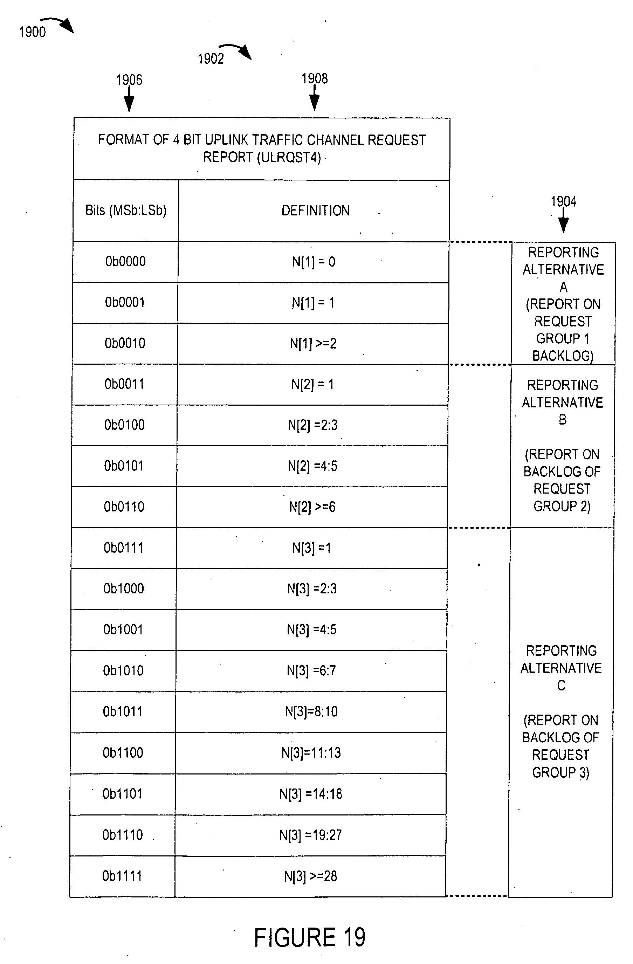

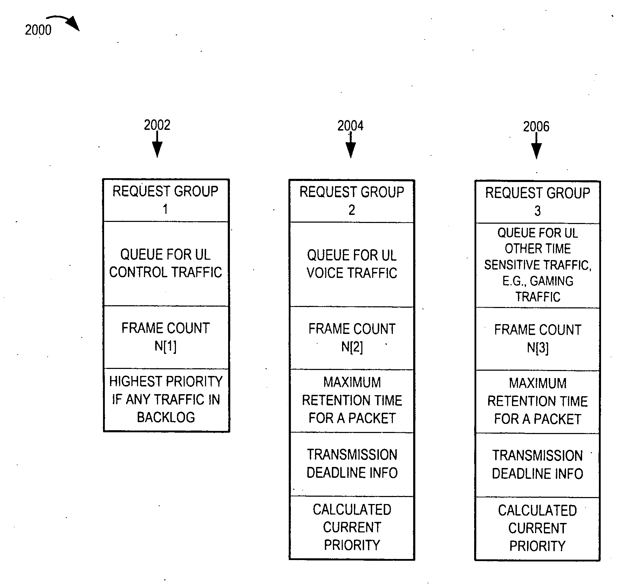

Figure 19 is a drawing 1900 including a table 1902 describing an exemplary format of exemplary 4 bit uplink traffic request report (ULRQST4) and a column 1904 describing reporting alternatives. Column 1906 of table 1902 lists the 16 possible information bit patterns for the report, and column 1908 lists reported backlog infonnation conveyed corresponding to each of the possible bit patterns. For example, N[1] = 1 indicates that request group 1 has one frame in its backlog to be transmitted; N[2] =4:5 indicates that request group 2 has a total of 4 or 5 frames in its backlog to be transmitted. N[3]>=28 indicates that request group 3 has 28 or more frames in its backlog to be communicated. Column 1904 indicates that reporting alternative A reports request group 1 backlog information and corresponds to bit patterns (0000, 0001, 0010). Column 1904 also indicates that reporting alternative B reports on request group 2 backlog and corresponds to bit patterns (0011, 0100, 0101, 0110) and that reporting alternative C reports on request group 3 backlog and corresponds to bit patterns (0111, 1000, 1001, 1010, 1011, 1100, 1101, 1110, 1111).

Figure 20 is a drawing 2000 describing three exemplary request groups in an exemplary wireless terminal. Column 2002 describes that request group 1 has a queue for uplink control traffic, a frame count N[1], and that the request group assumes the highest priority if it has any traffic in its backlog. Column 2004 describes that request group 2 has a queue for uplink voice traffic, a frame count N[2], a maximum retention time for a packet before discarding, transmission deadline information, and a calculated current priority. Column 2006 describes that request group 3 has a queue for uplink other time sensitive traffic, e.g., gaming traffic, a frame count N[3], a maximum retention time for a packet before discarding, transmission deadline information, and a calculated current priority.

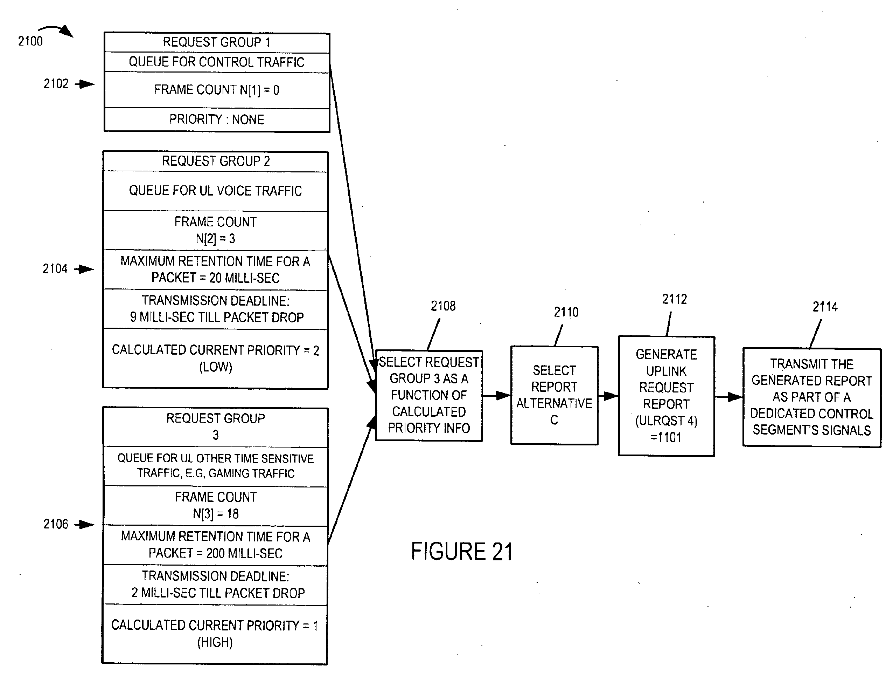

Figure 21 is a drawing 2100 illustrating an example of a method of an exemplary wireless terminal, e.g., wireless terminal 400, using the exemplary 4 bit uplink request report format of table 1900 of Figure 19 and including the request groups of drawing 2000 of Figure 20. Block 2102 shows that request group 1 used for control traffic has a zero frame count backlog and therefore is removed from consideration regarding priority. Block 2104 shows that request group 2, used for voice traffic, has a frame count of 3, a maximum packet retention time of 20 milli-seconds, and a current transmission deadline of 9 milli-sec before a packet will be dropped if not transmitted; block 2106 shows that request group 3, used for other time sensitive traffic such as gaming traffic, has a frame count of 18, a maximum packet retention time of 200 milli-seconds, and a current transmission deadline of 2 milli-sec before a packet will be dropped if not transmitted. The transmission deadlines have been calculated by the wireless terminal, and the wireless terminal calculates current priority levels as a function of that information. In this example, the wireless terminal has calculated the current priority level = 2 (low priority) for request group 2 as indicated by information 2104 and has calculated the current priority level =
I (high) for request group 3 as indicated by information 2106, e.g., selecting the request group with the smaller transmission deadline value to have the higher priority. Block 2108 indicates that the wireless terminal selects request group 2 as a function of current calculated priority, e.g., the wireless terminal selects the request group having the highest calculated priority. Block 2110 shows that the wireless terminal selects report alternative C, as report alternative C reports backlog information on request group 3. Block 2112 indicates that the wireless terminal generates an uplink request report with information bit pattern =1101; namely, N[3] = 18, which is the range 14:18 which maps to bit pattern 1101. Then, block 2114 indicates the wireless terminal transmits the generated uplink request report as part of a dedicated control segment's signals.

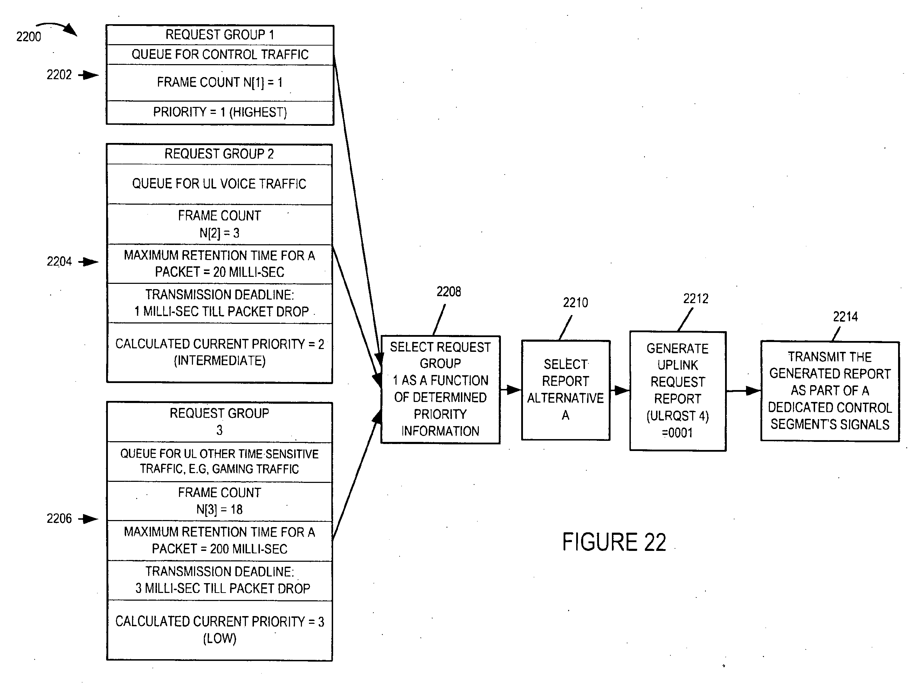

Figure 22 is a drawing 2200 illustrating another example of a method of an exemplary wireless terminal, e.g., wireless terminal 400, using the exemplary 4 bit uplink request report format of table 1900 of Figure 19 and including the request groups of drawing 2000 of Figure 20. Block 2202 shows that request group 1 used for control traffic has a frame count = 1 and therefore assumes the highest priority level = 1. Block 2204 shows that request group 2, used for voice traffic, has a frame count of 3, a maximum packet retention time of 20 milli-seconds, and a current transmission deadline of 1 milli-sec before a packet will be dropped if not transmitted; block 2206 shows that request group 3, used for other time sensitive traffic such as gaming traffic, has a frame count of 18, a maximum packet retention time of 200 milli-seconds, and a current transmission deadline of 3 milli-sec before a packet will be dropped if not transmitted. The transmission deadlines have been calculated by the wireless terminal, and the wireless terminal calculates current priority levels as a function of that information. In this example, the wireless terminal has a non-zero backlog in request group 1 which assumes the highest priority and overrides any calculated priority determinations of the other request groups. Block 2208 indicates that the wireless terminal selects request group 1 as a function of the determined priority information. Block 2210 shows that the wireless terminal selects report alternative A, as report alternative A reports backlog information on request group 1. Block 2212 indicates that the wireless terminal generates an uplink request report with information bit pattern = 0001; namely, N[1] = 1, which maps to bit pattern 0001. Then, block 2214 indicates the wireless terminal transmits the generated uplink request report as part of a dedicated control segment's signals.

In some embodiments, in which transmission deadline information is calculated corresponding to request groups, a report format is such that for at least reporting alternatives multiple request groups are jointly coded. In some embodiments, at least some of the information to bit mapping definitions include control factors based upon information such as a previously transmitted power report and/or a previously transmitted interference report. In some embodiments, at least some of the information to bit mapping definitions indicate no change from a previously transmitted report.

While described in the context of an OFDM system, the methods and apparatus of various embodiments, are applicable to a wide range of communications systems including many non-OFDM and/or non-cellular systems.

In various embodiments nodes described herein are implemented using one or more modules to perform the steps corresponding to one or more methods, for example, signal processing, report alternative selection, report generation, deadline determination, scheduling priority calculation. In some embodiments various features are implemented using modules. Such modules may be implemented using software, hardware or a combination of software and hardware. Many of the above described methods or method steps can be implemented using machine executable instructions, such as software, included in a machine readable medium such as a memory device, e.g., RAM, floppy disk, etc. to control a machine, e.g., general purpose computer with or without additional hardware, to implement all or portions of the above described methods, e.g., in one or more nodes. Accordingly, among other things, various embodiments are directed to a machine-readable medium including machine executable instructions for causing a machine, e.g., processor and associated hardware, to perform one or more of the steps of the above-described method(s).

Numerous additional variations on the methods and apparatus described above will be apparent to those skilled in the art in view of the above descriptions. Such variations are to be considered within scope. The methods and apparatus of various embodiments may be, and in various embodiments are, used with CDMA, orthogonal frequency division multiplexing (OFDM), and/or various other types of communications techniques which may be used to provide wireless communications links between access nodes and mobile nodes. In some embodiments the access nodes are implemented as base stations which establish communications links with mobile nodes using OFDM and/or CDMA. In various embodiments the mobile nodes are implemented as notebook computers, personal data assistants (PDAs), or other portable devices including receiver/transmitter circuits and logic and/or routines, for implementing the methods of various embodiments.

## Claims

1. A method (700) of operating a wireless terminal in a wireless communications system, comprising:
determining (706) transmission deadline information corresponding to at least some of a plurality of different request groups including queued traffic;
dynamically calculating (708) a scheduling priority for each of said at least some of a plurality of different request groups for which transmission deadline information was determined;
selecting (710) one of a plurality of reporting alternatives, said selected one of the reporting alternatives being a reporting alternative corresponding to the request group determined to have the highest priority; and
transmitting (712) an uplink request report including backlog information corresponding to the request group determined to have the highest priority, said transmitted uplink request report being in accordance with the selected reporting alternative.

2. The method of claim 1, wherein each of the different request groups corresponds to one or a set of communication queues which can be used to store data to be transmitted.

3. The method of claim 1, wherein at least some of said reporting alternatives correspond to different request groups, said different reporting alternatives being part of a report format for an n-bit size uplink request report, said report format defining a plurality of different n-bit mappings where n is a positive integer.

4. The method of claim 1, further comprising:
prior to performing said step of determining transmission deadline information, determining (704) which of the plurality of different request groups have queued traffic.

5. The method of claim 1, wherein determining the highest priority includes considering a priority of at least one additional request group in addition to said at least some of a plurality of different request groups.

6. The method of claim 5, wherein said at least one additional request group is determined to have the highest priority provided it has at least some traffic to be transmitted.

7. The method of claim 3, wherein said selecting one of the reporting alternatives includes:
selecting the reporting alternative which reports backlog information corresponding to the request group having the highest calculated priority.

8. The method of claim 7, wherein said request group having the highest calculated priority includes at least some traffic that will be dropped if not allocated traffic channel resources in response tc the generated uplink request report.

9. The method of claim 5, wherein said at least some of the different request groups includes a request group associated with voice traffic and a request group associated with another type of time critical traffic, and wherein a packet placed in a request group queue associated with said another type of time critical traffic is allowed to remain for a longer time than a packet placed in a request group queue associated with voice traffic before being dropped if not transmitted.

10. The method of claim 9, wherein said another type of time critical traffic is gaming traffic.

11. The method of claim 9, wherein relative priority level ranking between said voice traffic request group and said another type of time critical traffic changes over time.

12. The method of claim 3, wherein said report is a multi-bit uplink request report in a dedicated control channel reporting structure.

13. A wireless terminal for use in a wireless communications system comprising:
means for determining transmission deadline information corresponding to at least some of a plurality of different request groups including queued traffic;
means for dynamically calculating a scheduling priority for each of said at least some of a plurality of different request groups for which transmission deadline information was determined;
means for selecting one of a plurality of reporting alternatives, said selected one of the reporting alternatives being a reporting alternative corresponding to the request group determined to have the highest priority; and
means for transmitting an uplink request report including backlog information corresponding to the request group determined to have the highest priority, said transmitted uplink request report being in accordance with the selected reporting alternative.

14. The wireless terminal of claim 13 further comprising:
means for monitoring the status of queues for determining which of the plurality of different request groups have queued traffic.

15. The wireless terminal of claim 13, wherein said at least some of the plurality of request groups includes a request group associated with voice traffic and a request group associated with a different type of time sensitive traffic.

16. A computer readable medium embodying machine executable instruction for controlling a wireless terminal in a wireless communications system to implement the method of any of claims 1 to 12.

17. A device for use in a wireless communications system comprising:
a processor configured to perform the method of any of claims 1 to 12.

## Patentansprüche

1. Ein Verfahren (700) zum Betreiben eines drahtlosen Endgeräts in einem drahtlosen Kommunikationssystem, wobei das Verfahren Folgendes aufweist:
Bestimmen (706) von Sendefrist-Ablaufsinformationen entsprechend wenigstens einigen von einer Vielzahl von unterschiedlichen Anfragegruppen einschließlich in eine Warteschlange eingereihten Verkehr;
dynamisches Berechnen (708) einer Planungspriorität für jede der wenigstens einigen von einer Vielzahl von unterschiedlichen Anfragegruppen für die Sendefrist-Ablaufsinformationen bestimmt wurden;
Auswählen (710) von einer Vielzahl von Berichterstattungsalternativen, wobei die ausgewählte der Berichterstattungsalternativen eine Berichterstattungsalternative ist, die der Anfragegruppe entspricht, für die bestimmt wurde die höchste Priorität zu haben; und
Senden (712) eines Aufwärtsverbindungs-Anfrageberichts einschließlich Backlog-Informationen, entsprechend der Anfragegruppe, die bestimmt wurde die höchste Priorität zu haben, wobei der gesendete Aufwärtsverbindungs-Anfragebericht sich im Einklang befindet mit der ausgewählten Berichtserstattungsalternative.

2. Verfahren nach Anspruch 1, wobei jede der unterschiedlichen Anfragegruppen einem oder einem Satz von Kommunikationswarteschlangen entspricht, die benutzt werden können, um Daten, die gesendet werden sollen, zu speichern.

3. Verfahren nach Anspruch 1, wobei wenigstens einige der Berichterstattungsalternativen den unterschiedlichen Anfragegruppen entsprechen, wobei die unterschiedlichen Berichterstattungsalternativen Teil eines Berichtformats für einen n-bit-großen Aufwärtsverbindungs-Anfragebericht sind, wobei das Berichtformat eine Vielzahl von unterschiedlichen n-bit-Abbildungen definiert, wobei n eine positive ganze Zahl ist.

4. Verfahren nach Anspruch 1, das weiterhin Folgendes aufweist:
vor dem Durchführen des Schritts des Bestimmens der Sendefrist-Ablaufinformationen, Bestimmen (704), welche der Vielzahl von unterschiedlichen Anfragegruppen den in eine Warteschlange eingereihten Verkehr hat.

5. Verfahren nach Anspruch 1, wobei das Bestimmen der höchsten Priorität das Betrachten einer Priorität von wenigstens einer zusätzlichen Anfragegruppe zusätzlich zu der wenigstens einigen von einer Vielzahl von unterschiedlichen Anfragegruppen beinhaltet.

6. Verfahren nach Anspruch 5, wobei die wenigstens eine zusätzliche Anfragegruppe bestimmt wird, die höchste Priorität zu haben, vorausgesetzt sie hat wenigstens einigen Verkehr, der gesendet werden soll.

7. Verfahren nach Anspruch 3, wobei das Auswählen von einer der Berichterstattungsalternativen Folgendes beinhaltet:
Auswählen der Berichterstattungsalternative, die Backlog-Informationen entsprechend der Anfragegruppe mit der höchsten berechneten Priorität berichtet.

8. Verfahren nach Anspruch 7, wobei die Anfragegruppe mit der höchsten berechneten Priorität wenigstens einigen Verkehr beinhaltet, der fallengelassen werden wird, wenn keine zugeordneten Verkehrskanal-Ressourcen ansprechend auf den generierten Aufwärtsverbindungs-Anfragebericht.

9. Verfahren nach Anspruch 5, wobei die wenigstens einigen der unterschiedlichen Anfragegruppen eine Anfragegruppe, die mit Sprachverkehr assoziiert ist und eine Anfragegruppe, die mit einem anderen Typ von zeitkritischem Verkehr assoziiert ist, beinhalten, und wobei einem Paket, das in einer Anfragegruppe-Warteschlange platziert ist, die mit dem anderen Typ des zeitkritischen Verkehrs assoziiert ist, erlaubt wird für eine längere Zeit zu bleiben im Vergleich zu einem Paket, das in einer Anfragegruppe-Warteschlange platziert ist, die mit Sprachverkehr assoziiert ist, und zwar bevor es fallengelassen wird, wenn es nicht gesendet wird.

10. Verfahren nach Anspruch 9, wobei der andere Typ von zeitkritischem Verkehr Spielverkehr ist.

11. Verfahren nach Anspruch 9, wobei relative Prioritätspegel-Rangordnung zwischen der Sprachverkehrs-Anfragegruppe und dem anderen Typ von zeitkritischem Verkehr sich über die Zeit ändert.

12. Verfahren nach Anspruch 3, wobei der Bericht ein Multi-Bit-Aufwärtsverbindungs-Anfragebericht in einem dedizierten Steuerungskanal Berichterstattungsstruktur ist.

13. Ein drahtloses Endgerät für die Verwendung in einem drahtlosen Kommunikationssystem, wobei das Endgerät Folgendes aufweist:
Mittel zum Bestimmen von Sendefrist-Ablaufsinformationen,
entsprechend von wenigstens einigen von einer Vielzahl von unterschiedlichen Anfragegruppen einschließlich von in einer Warteschlange eingereihten Verkehr;
Mittel zum dynamischen Berechnen einer Planungspriorität für jede der wenigstens einigen von einer Vielzahl von unterschiedlichen Anfragegruppen für die Sendefrist-Ablaufsinformationen bestimmt wurden;
Mittel zum Auswählen einer von einer Vielzahl von Berichterstattungsalternativen, wobei die ausgewählte der Berichterstattungsalternativen eine Berichterstattungsalternative ist,
entsprechend der Anfragegruppe, die bestimmt wurde die höchste Priorität zu haben; und
Mittel zum Senden eines Aufwärtsverbindungs-Anfrageberichts einschließlich Backlog-Informationen, entsprechend der Anfragegruppe,
die bestimmt wurde die höchste Priorität zu haben, wobei der gesendete Aufwärtsverbindungs-Anfragebericht sich im Einklang befindet mit der ausgewählten Berichterstattungsalternative.

14. Drahtloses Endgerät nach Anspruch 13, das weiterhin Folgendes aufweist:
Mittel zum Überwachen des Status der Warteschlangen zum Bestimmen welche der Vielzahl von unterschiedlichen Anfragegruppen in Warteschlangen eingereihten Verkehr hat.

15. Drahtloses Endgerät nach Anspruch 13, wobei die wenigstens einigen der Vielzahl von Anfragegruppen eine Anfragegruppe beinhalten, assoziiert mit Sprachverkehr und eine Anfragegruppe, assoziiert mit einem unterschiedlichen Typ von zeitsensitivem Verkehr.

16. Ein computer-lesbares Medium, das maschinenausführbare Instruktionen zum Steuern eines drahtlosen Endgeräts in einem drahtlosen Kommunikationssystem eingebaut hat, und zwar zum Implementieren des Verfahrens nach einem der Ansprüche 1 bis 12.

17. Ein Gerät für die Verwendung in einem drahtlosen Kommunikationssystem, das Folgendes aufweist:
einen Prozessor, konfiguriert zum Durchführen des Verfahrens nach einem der Ansprüche 1 bis 12.

## Revendications

1. Procédé (700) d'actionnement d'un terminal sans fil dans un système de communications sans fil, comprenant les étapes suivantes :
déterminer (706) des informations de délai limite de transmission correspondant à au moins certains d'une pluralité de groupes de requêtes différents comprenant du trafic de communications mis en file d'attente ;
calculer dynamiquement (708) une priorité de planification pour chacun desdits au moins certains d'une pluralité de groupes de requêtes différents pour lesquels des informations de délai limite de transmission ont été déterminées ;
sélectionner (710) l'une d'une pluralité de variantes de compte-rendu, ladite une sélectionnée des variantes de compte-rendu étant une variante de compte-rendu correspondant au groupe de requêtes déterminé comme ayant la priorité la plus haute ; et
transmettre (712) un compte-rendu de requête en liaison montante comprenant des informations de travail en attente correspondant au groupe de requêtes déterminé comme ayant la priorité la plus haute, le compte-rendu de requête en liaison montante transmis étant conforme à la variante de compte-rendu sélectionnée.

2. Procédé selon la revendication 1, dans lequel chacun des groupes de requêtes différents correspond à une ou à un ensemble de files d'attente de communications qui peuvent être utilisées pour mémoriser des données à transmettre.

3. Procédé selon la revendication 1, dans lequel au moins certaines des variantes de compte-rendu correspondent à des groupes de requêtes différents, les différentes variantes de compte-rendu faisant partie d'un format de compte-rendu pour un compte-rendu de requête en liaison montante d'une taille de n bits, le format de compte-rendu définissant une pluralité de mappage différents de n bits, n étant un entier positif.

4. Procédé selon la revendication 1, comprenant en outre :
avant d'effectuer l'étape de détermination d'informations de délai limite de transmission, déterminer (704) lesquels de la pluralité de groupes de requêtes différents ont du trafic de communications en file d'attente.

5. Procédé selon la revendication 1, dans lequel la détermination de la priorité la plus haute comprend la prise en considération d'une priorité d'au moins un groupe de requêtes supplémentaire en plus desdits au moins certains de la pluralité de groupes de requêtes différents.

6. Procédé selon la revendication 5, dans lequel ledit au moins un groupe de requêtes supplémentaire est déterminé comme ayant la priorité la plus haute pourvu qu'il ait au moins un peu de trafic de communications à transmettre.

7. Procédé selon la revendication 3, dans lequel la sélection d'une des variantes de compte-rendu comprend :
sélectionner la variante de compte-rendu qui rend compte d'informations de travail en attente correspondant au groupe de requêtes ayant la priorité calculée la plus haute.

8. Procédé selon la revendication 7, dans lequel le groupe de requêtes ayant la priorité calculée la plus haute comprend au moins un peu de trafic de communications qui va être abandonné si on n'alloue pas de ressources de canal de communication en réponse au compte-rendu de requête en liaison montante généré.

9. Procédé selon la revendication 5, dans lequel lesdits au moins certains groupes de requêtes différents comprennent un groupe de requêtes associé à du trafic de communications vocales et un groupe de requêtes associé à un autre type de trafic de communications critique temporellement, et dans lequel un paquet placé dans une file d'attente de groupe de requêtes associée à l'autre type de trafic de communications critique temporellement est autorisé à rester plus longtemps qu'un paquet placé dans une file d'attente de groupe de requêtes associée à du trafic de communications vocales avant d'être abandonné s'il n'est pas transmis.

10. Procédé selon la revendication 9, dans lequel l'autre type de trafic de communications critique temporellement est du trafic de communications de jeu.

11. Procédé selon la revendication 9, dans lequel le classement de niveau de priorité relatif entre le groupe de requêtes de trafic de communications vocales et l'autre type de trafic de communications critique temporellement change dans le temps.

12. Procédé selon la revendication 3, dans lequel le compte-rendu est un compte-rendu de requête en liaison montante à bits multiples dans une structure de compte-rendu de canal de commande dédié.

13. Terminal sans fil pour utilisation dans un système de communications sans fil, comprenant :
des moyens de détermination d'informations de délai limite de transmission correspondant à au moins certains d'une pluralité de groupes de requêtes différents comprenant du trafic de communications mis en file d'attente ;
des moyens de calcul dynamique d'une priorité de planification pour chacun desdits au moins certains d'une pluralité de groupes de requêtes différents pour lesquels des informations de délai limite de transmission ont été déterminées ;
des moyens de sélection de l'une d'une pluralité de variantes de compte-rendu, ladite une sélectionnée des variantes de compte-rendu étant une variante de compte-rendu correspondant au groupe de requêtes déterminé comme ayant la priorité la plus haute ; et
des moyens de transmission d'un compte-rendu de requête en liaison montante comprenant des informations de travail en attente correspondant au groupe de requêtes déterminé comme ayant la priorité la plus haute, le compte-rendu de requête en liaison montante transmis étant conforme à la variante de compte-rendu sélectionnée.

14. Terminal sans fil selon la revendication 13, comprenant en outre :
des moyens de surveillance du statut de files d' attente pour déterminer lesquels de la pluralité de groupes de requêtes différents ont du trafic de communications en file d'attente.

15. Terminal sans fil selon la revendication 13, dans lequel lesdits au moins certains de la pluralité de groupes de requêtes comprennent un groupe de requêtes associé à du trafic de communications vocales et un groupe de requêtes associé à un type différent de trafic de communications sensible temporellement.

16. Support lisible par un ordinateur mettant en oeuvre des instructions exécutables par une machine pour commander un terminal sans fil dans un système de communication sans fil pour mettre en oeuvre le procédé de l'une quelconque des revendications 1 à 12.

17. Dispositif pour utilisation dans un système de communications sans fil, comprenant :
un processeur agencé pour exécuter le procédé de l'une quelconque des revendications 1 à 12.
